(19) Europäisches Patentamt
European Patent Office
Office européen des brevets

(11) EP 1 517 455 B1

(12) **EUROPEAN PATENT SPECIFICATION**

(45) Date of publication and mention of the grant of the patent:
**23.06.2010 Bulletin 2010/25**

(51) Int Cl.:
***H04B 7/005*** *(2006.01)* ***H01Q 21/24*** *(2006.01)*

(21) Application number: **03425608.1**

(22) Date of filing: **18.09.2003**

(54) **Transmission power control method for cross-polarized signals**

Sendeleistungsregelungsverfahren für orthogonal polarisierte Signale

Procédé de commande de puissance d'émission pour signaux à polarisations orthogonales

(84) Designated Contracting States:
**AT BE BG CH CY CZ DE DK EE ES FI FR GB GR HU IE IT LI LU MC NL PT RO SE SI SK TR**

(43) Date of publication of application:
**23.03.2005 Bulletin 2005/12**

(73) Proprietor: **Nokia Siemens Networks S.p.A.**
**20060 Cassina de'Pecchi (MI) (IT)**

(72) Inventors:
- **Brugali, Mauro**
  **20040 Bellusco (IT)**
- **Sampietro, Luigi**
  **22063 Cantu (IT)**
- **Santacesaria, Claudio**
  **20139 Milan (IT)**

(74) Representative: **Fischer, Michael et al**
**Nokia Siemens Networks GmbH & Co. KG**
**COO RTP IPR, Patent Administration**
**80240 München (DE)**

(56) References cited:
**US-A- 5 392 459**

- **KALATIZADEH Y ET AL: "Active atmospheric fade compensation for spacecraft antennas" NINTH INTERNATIONAL CONFERENCE ON ANTENNAS AND PROPAGATION (CONF. PUBL. NO.407), NINTH INTERNATIONAL CONFERENCE ON ANTENNAS AND PROPAGATION (CONF. PUBL. NO.407), EINDHOVEN, NETHERLANDS, 4-7 APRIL 1995, pages 395-399 vol.2, XP002268713 1995, London, UK, IEE, UK ISBN: 0-85296-637-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to the field of the line-of-sight radio links, either point-to-point or point-to-multipoint, and more precisely to an optimum power setting method and system in a line-of-sight radio link with cross-polarized cochannel signals. The invention optimises the performance of the link by a trade-off between the minimum time of outage due to rain attenuation and the maximum distance covered by the link.

### BACKGROUND ART

For radio systems in the bands above 10 GHz, the rain is the main limiting factor for the performance of the line-of-sight radio link. The rain is responsible of two impairments: 1) direct attenuation and 2) depolarization of the transmitted signal. If the radio system uses only one type of channel polarization (Horizontal or Vertical), it is named "Alternate Pattern" system" (or "AP" system). In this case the only direct attenuation must be considered. If the radio system uses both Horizontal and Vertical polarizations and the same frequency, in order to double the capacity of the available channel, it is named "Co-Channel" system (or "CC" system'). In the latter case, other than the direct attenuation also an additional attenuation due to the phenomenon of depolarization must be considered, because the signal transmitted on each of the two orthogonal polarizations interferes with the other one. Since the present invention deals with CC Systems, both phenomena must be considered. For planning purposes, propagation models must be used. The propagation models described in the following ITU-R P 530 standard: "Propagation Data and Prediction Methods Required for the Design of Terrestrial standard Line-Of-Sight Systems" are usually recommended. In accordance with the aforementioned document, when the radio frequency band fall above 10 GHz the overall performance due to the radio propagation is governed from rain. Since the rain is a phenomenon variable both in space and in time, it is necessary to make use of statistic distributions to foresee direct attenuation and depolarization. For example, we can evaluate the 'specific attenuation' γ due to rain exceeded for 0.01 % of all the time (equivalent to 50 min/year) starting from this formula:

$$\gamma_{0.01\%\,Rain} = K \cdot R^{\alpha} (dB/km) \qquad \text{(Eq.1)}$$

where:

- R is the intensity of the precipitation expressed as mm/h exceeded for 0.01 % of time in the worst month of the year, and it is defined for all locations of the globe in the following **Rec. ITU-R P 837** standard: "Characteristics of precipitation for propagation modelling"; and
- K and α are coefficients which depend on the frequency and on horizontal H and vertical V polarizations; they are tabulated in the following **Rec. ITU-R P 838** standard: "Specific Attenuation Model for rain for use in prediction methods".

From (Eq.1) the total direct attenuations exceeded for the 0.01% of the time, and for a given link of length L [km], is calculated as:

$$A_{0.01\%\,Rain} = \gamma_{0.01\%\,Rain} \cdot L_{eff} \qquad \text{(Eq.2)}$$

where $L_{eff}$ is the effective length of the link, which is defined in the **Rec. ITU-R P 530** as function of L, and it is usually lower than L to take account of the fact that the rain is not present with uniformity along the entire hop.

This formula is indicated in the **Rec. ITU R P 530** to calculate the direct attenuation exceeded for a percent of time p different from 0.01%:

$$A_{p\%\,Rain} = A_{0.01\%\,Rain} \cdot B \cdot p^{-(C+D\cdot\log10(p))} \qquad \text{(Eq.3)}$$

where B, C and D are coefficients, which depend on the geographic position of the hop. As an example in **fig.1** the two direct attenuations exceeded for the 0.01% of the time are shown for both H and V polarizations as function of distance D [km]; the following parameters are assumed:

- Radio Frequency = 18 GHz;
- $R_{0.01\%}$= 42 mm/h (corresponding to the mean value for

Italy in the Rain zone K).

As can be seen in **fig.1** the attenuation for the H polarization is higher than that for V polarization.

Like the attenuation, also the depolarization has to be characterised by statistical distributions. The parameter that characterizes the phenomenon of the depolarization is named XPD. It is defined as the ratio, after the depolarizing mechanism, between the co-polar signal received, and the cross-polar signal received in the orthogonal polarization. But the rain is not the only mechanism that causes the depolarization, also the transmitter and receiver antennas must be considered. The transmitter antenna, for example, introduces a depolarization $XPD_{TX}$; this means that if the power $w_V$ is transmitted using the V polarization (in the following 'lowercase' symbol w indicates power in linear unit, while 'Uppercase' indicates dB unit), a part $w_H$ of this power will fall in the orthogonal polarization, and:

$$XPD_{TX} = 10 \cdot \log_{10}(\frac{w_V}{w_H}) \qquad \text{(Eq.4)}$$

A similar attenuation $XPD_{RX}$ exists for the receiving antenna.

The recommended propagation model in **ITU-R P 530** states that the rain depolarization $XPD_{Rain}$ may be evaluated starting from direct attenuation, with this formula:

$$XPD_{Rain} = U - \Psi \cdot logCPA \qquad \text{(Eq.5)}$$

where CPA (copolar attenuation) is the attenuation of the transmitted either H or V polarization and the coefficients U and $\Psi$ are dependent on the frequency. As consequence of (Eq.5) two distinct XPD depolarizations due to rain are possible, namely: $XPD_{Rain}H$ and an $XPD_{Rain}V$, but the difference between them is not very significant because of the variability of the parameters U and $\Psi$, as remarked in the paragraph **4.2.1** of **Rec. ITU-R P 530-8.** So in the following the worst case for the $XPD_{Rain}$ parameter has to be considered. To take into account all the depolarization mechanisms: namely rain plus the effect of the antennas, the total Cross Polar Isolation (XPI) may be calculated. The XPI is defined as the ratio, at the receiver, between the power received on one polarization and that received over the same polarization due to the transmission over the orthogonal channel. There are two XPI values for the two H and V polarizations, respectively defined as :

$$XPI_H = \frac{P(w_{RX}(H \to H))}{P(w_{RX}(V \to H))}$$

$$\text{(Eq.6)}$$

$$XPI_V = \frac{P(w_{RX}(V \to V))}{P(w_{RX}(H \to V))}$$

where $w_{RX}(H \to H)$ is the power transmitted on the H polarization and received on H, and so on for the other terms. The following (Eq.7) is a detailed development of the (Eq.6) in logarithmic form:

$$XPI_H = (P_{TX}H - P_{TX}V) - 10 \cdot \log(10^{-\frac{XPD_{TX}}{10}} + 10^{\frac{A_{Rain}H - A_{Rain}V - XPD_{RX}}{10}} + 10^{\frac{A_{Rain}H - A_{Rain}V - XPD^{V}_{Rain}}{10}})$$

(Eq.7)

$$XPI_V = (P_{TX}V - P_{TX}H) - 10 \cdot \log(10^{-\frac{XPD_{TX}}{10}} + 10^{\frac{A_{Rain}V - A_{Rain}H - XPD_{RX}}{10}} + 10^{\frac{A_{Rain}V - A_{Rain}H - XPD^{H}_{Rain}}{10}})$$

where the parameters have the following meaning:

- $P_{TX}V$ = Power transmitted on the Vertical polarization;
- $P_{TX}H$ = Power transmitted on the Horizontal polarization;
- $XPD_{Rain}{}^{V}$ - XPD due to the rain (see Eq.5);
- $XPD_{Rain}{}^{H}$ = XPD due to the rain (see Eq.5);
- $XPD_{TX}$ = XDP of the transmission antenna;
- $XPD_{RX}$ = XDP of the receiver antenna;
- $A_{Rain}V$ = Attenuation due to rain for the Vertical polarization (see also **fig.1**);
- $A_{Rain}H$ = Attenuation due to rain for the Horizontal polarization (see also **fig.1**).

In **fig.2** the two curves of $XPI_H$ and $XPI_V$ exceeded for the 0.01% of the time versus the distance D [km] are shown, with these parameters:

- Radio Frequency = 18 GHz;
- $R_{0.01\%}$ = 42 mm/h;
- $XPD_{TX}$ = 33 dB;
- $XPD_{RX}$ = 33 dB;
- $P_{TX}H$ = 18 dBm;
- $P_{TX}V$ = 18 dBm.

As it can be seen in **fig.2** the curve of $XPI_H$ is always below the curve of $XPI_V$ and the difference increases with the increasing of the distance much more than the difference due to the direct attenuation of **fig .1**. This means that during the rain phenomenon the H polarization suffers not only a bigger direct attenuation than the V one but also a bigger cross-polar interference. To plan a radio link using a cross-polar cochannel system, it is necessary to make a balance between the 'Fading Margin' (FM) and a 'Required Margin for Rain' (RM). The 'Fading Margin' is defined as:

$$FM = P_{TX}^{H/V} + G_{TX} + G_{RX} - A_{FS} - PRX_{TH} \qquad \text{(Eq.8)}$$

ad it is intended as a power margin valid in no fading conditions (the so called 'clear air'); $G_{TX}$ and $G_{RX}$ are the transmission and reception antenna gains, respectively; while $P_{TX}$ is the transmission power (H or V) ; $PRX_{TH}$ is the RX threshold; and $A_{FS}$ is the attenuation due to free space (path-loss).

To define the 'Required Margin for Rain' it is necessary to take into account both direct attenuation and depolarization; the latter causes an interference coming from the orthogonal polarization that degrades the power threshold at the receiver. The 'Required Margin for Rain' may be defined as:

$$RM_V = A^{V}_{Rain} - 10 \cdot \log_{10}(1 - 10^{\frac{(S/N)th - XPI^{V}}{10}})$$

(Eq.9)

$$RM_H = A^{H}_{Rain} - 10 \cdot \log_{10}(1 - 10^{\frac{(S/N)th - XPI^{H}}{10}})$$

where $A_{Rain}$H/V are the attenuations due to rain (see also Eq.3), and $(S/N)_{th}$ is the Signal to Noise ratio at the BER corresponding to the receiver threshold. Note that the 'Required Margin for Rain' must be intended as the 'Required Margin' calculated for a given probability (for example the 0.01% of the overall time). If a more rainy region or/and a lower probability is considered, the 'Required Margin' will increase.

In **fig.3** an example of margin balance is shown. The 'Fading Margin' and the 'Required Margin for Rain' versus distance D [km] have been calculated, assuming the parameters indicated in the LEGENDA, typical for radio system with 32TCM (Trellis Code Modulation) format.

with reference to **fig. 3,** when a curve of the RM intersects the curve of FM the maximum length with the relevant polarization is reached. The distances of 10.67 km for H polarization and 21.04 km for V polarization are respectively indicated in the figure. The maximum possible length for the cochannel radio link must be calculated as the minimum between the distances obtained with the two polarizations, so that 10.67 km is the maximum distance for the radio link. The impairment introduced by the reduction of the XPI parameter due to the interference coming from the orthogonal polarization during the rain is evident. As a known countermeasure an XPIC device (Cross Polar Interference Canceller) is usually employed in CC Systems. The international standard **IEC 60835-2-11**, 1996, Part 2: "Measurement on terrestrial radio-relay systems", Section 11, describes the architecture of a Cross-polarization interference canceller (XPIC) and its impact on the performances of the system.

In **fig.4** the main block diagram of a CC System with XPIC is illustrated. With reference to **fig.4** two stations indicated as STATION-A and STATION-B connected by cross-polar cochannel FDD (Frequency Division Duplexing) radio link are depicted. The first STATION-A transmits on frequency f1 and receives on frequency f2, while the second STATION-B transmits on frequency f2 and receives on frequency f1. A single antenna with orthogonal feeders is used by each station. The two feeders are connected to respective circulators. These three-port devices are able to keep the transmission and reception signal each other separated at the two ports other the one connected to the common feeder. The two stations A and B include a first transmission-and-reception section connected to the H-circulator and a second transmission-and-reception section connected to the V-circulator. Each H/V section includes a transmitter and a receiver. Concerning STATION-A, the H-section comprises a receiver REC-H-A, equipped with a XPIC device, and a transmitter TRANS-H-A; the V-section comprises a receiver REC-V-A, equipped with a XPIC device, and a transmitter TRANS-V-A. Concerning STATION-B: the H-section comprises a receiver REC-H-B, equipped with a XPIC device, and a transmitter TRANS-H-B; the V-section comprises a receiver REC-V-B, equipped with a XPIC device, and a transmitter TRANS-V-B. Inside the two stations A and B the couple of transmitters are synchronised by a signal OLTX, and the couple of receivers by a signal OLRX, both acting on the respective local oscillators. With D1a and D2a are indicated the baseband transmission signals of STATION-A, respectively horizontally or vertically polarized. Similarly, D1b and D2b indicate the baseband transmission signals of STATION-B, respectively horizontally or vertically polarized. The signals D1a, D2a and D1b, D2b are the ones further indicated as reception signals of the destination stations B and A, respectively. For the aim of describing the connection of the XPIC devices, the structure of the receivers are detailed with reference to the only STATION-B. The block diagram of STATION-B shows the detail of the two receivers REC-H-B and REC-V-B, including a front-end section FRT-H and FRT-V followed by a respective demodulator DEMOD-H and DEMOD-V. Each front-end FRT-H and FRT-V includes a Local Oscillator (LO) for the RF/IF conversion. The two local oscillators are controlled by the synchronisation signal OLRX outputted by a carrier recovery circuit of the PLL (Phase-Locked Loop) type (not shown) driven by the RX input data. The description of the two receivers is similar, so that the only REC-H-B is considered. The demodulator DEMOD-H includes two IF/BB frequency conversion stages, a first one is connected to the front-end FRT-H and a second one is connected to the front-end FRT-V. The two IF/BB stages receive the two intermediate frequency signals, either the IF on the direct H path or the $IF_X$ coming from the orthogonal V path, and convert them to baseband BB for the successive processing. An unique VCO (Voltage Controlled Oscillator) is used for the baseband conversion. The VCO is controlled by a symbol synchronisation recovery circuit, not shown in **fig.4** so as the A/D and D/A converters. The IF output of the direct IF/BB stage is connected to a first input of a digital adder. The $IF_x$ output of the transversal IF/BB stage is connected to the input of an XPIC device, which provides a correction signal (-) at the second input of the digital adder. The output signal of the digital adder reaches the input of a block ATDE (Adaptive Time Delay Equaliser) which outputs a time equalised and cross-polar interference-corrected signal D1a. The operation of the XPIC device is controlled in a known manner by a block CTRL that receives both the orthogonally polarized signal D1a and D2a present at the output of STATION-B. Let T the symbol time, the XPIC device is, for example, a T/2 spaced adaptive FIR filter that estimates the cross-polar interference for the aim of subtracting it from the useful signal.

For CC Systems equipped with XPIC devices, like the system represented in **fig.4**, it is possible to define a cross-polar Improvement Factor (XIF) as the XPI difference between the performance with and without the XPIC at specified BER and S/N. When XPIC device is equipped, an increment of XPI is an improvement that can be evaluated with:

$$XPI_H^{XPIC} = XPI_H + XIF$$

$$XPI_V^{XPIC} = XPI_V + XIF \quad \text{(Eq.10)}$$

To see an example let's take the link considered in **fig.3** but with a CC system equipped with XPIC devices, assuming the value of XIF = 20 dB. The resulting improvement on the balance between the fading margin FM and the required margin for rain RM is shown in **fig.5**, where the improvement introduced by the XPIC device is evident at glance. In fact the length of the link has been increased from 10.67 to 16.47 km. Since the $XPI_H$ values are low (see **fig.2**), the H polarization takes more advantage of the XPIC device that mitigates the interference from the orthogonal polarization.

The XPIC device is the ideal countermeasure against the interference from orthogonal polarization. It is the only one possible when the modulation format employed in the CC system is more complex, for example, than 32TCM; because in this case the system is too sensible to the interference from the orthogonal polarization. To explain this point consider that, in general, an interfering signal, characterized by a given value of C/I [dB], causes a degradation DEG [dB] of the receiver threshold expressed by:

$$DEG = -10 \cdot \log_{10}(-10^{-\frac{\frac{C}{I}-\left(\frac{S}{N}\right)_{th}}{10}} + 1) \quad \text{(Eq.11)}$$

Usually a degradation lower than 1 dB can be tolerated. From (Eq.11) supposing DEG = 1 dB, it results that C/I can be at the most 7 dB over the $(S/N)_{th}$ to tolerate the impairments. It follows that to avoid impairments the value of C/I [dB] must satisfy this inequality:

$$\frac{C}{I} > \left(\frac{S}{N}\right)_{th} + 7 \quad (12)$$

In a radio link employing a CC-System, and antennas characterized by XPD values: $XPD_{TX}$ and $XPD_{RX}$, for each channel (V and H), the value of C/I [dB] is given by:

$$\frac{C}{I} = XPI_H = XPI_V = XPD_{TOT} = -10 \cdot \log_{10}(10^{-\frac{XPD_{TX}}{10}} + 10^{-\frac{XPD_{RX}}{10}}) \quad (13)$$

where $XPD_{TOT}$ is the total XPD resulting from the XPD values of the two antennas. For example if the two antennas have $XPD_{TX}$ = 33 dB and $XPD_{RX}$ = 33 dB, then the $XPD_{TOT}$ = 30 dB (see **fig.2** at the point D = 0 km). Since complex modulation formats implies high values of $(S/N)_{th}$, then (Eq.12) implies that XPD guaranteed from the antennas, cannot be enough to obtain a value of C/I enough high. Therefore, for these modulation format XPIC device is necessary. Typically a value of $(S/N)_{th}$ = 20 dB can be considered as the upper limit (for the modulation format) which make the XPIC device necessary.

We need to emphasize that the main requirements for a cochannel system equipped with XPIC devices are:

- in the receiver it is necessary to synchronise the Local Oscillator (some systems synchronise also the transmitter section);
- to feed the XPIC devices, it is necessary to design two additional $IF_X$ sections on the orthogonal paths and connect them to the demodulator units. Each $IF_X$ section shall include sub-units like: base band frequency converter, A/D converter, and an XPIC section based on adaptive T/2 spaced traversal filter used to drive the orthogonal signal for cancelling the cross-polar interference. These sub-units weigh on price, space, and electrical consumption also when the functionality is not used. Furthermore if the reception/transmission unit is outdoor, the connection for Local Oscillator synchronisation will be consistent.

The cochannel system of **fig.4** is usually completed with the embodiment of an Automatic Transmission Power Control (ATPC), as the one depicted in **fig.6a.** With reference to **fig.6a**, the two independent loops to control the pair of relevant transmitters are shown for the only STATION-A. Each of the two transmitters TRANS-H-A and TRANS-V-A includes a variable RF power amplifier and a gain control circuit. The two gain control circuits are respectively indicated as CONTR-H-A and CONTR-V-A, respectively. They act upon the reception of respective power control signals PC_COM_H_A and PC_COM_V_A coming from dual control circuits CONTR-H-B and CONTR-V-B belonging to the corresponding receivers REC-H-B and REC-V-B inside STATION-B. The transmission of PC_COM_H_A and PC_COM_V_A signals can advantageously avail of two feedback radio channels. An envelope detector diode inside the two receivers REC-H-A and REC-V-A inside STATION-B is used to sense the attenuation of the reception signal RX on the respective H and V paths. The information about the attenuation is transferred to the control circuits CONTR-H-B and CONTR-V-B. These circuits calculate the incremental power steps, either positive or negative, and generate two power control commands PC_COM_H_A and PC_COM_V_A for the two transmitters TRANS-H-A and TRANS-V-A inside STATION-A. The two power control commands PC_COM_H_A and PC_COM_V_A are translated by the two circuits CONTR-H-A and CONTR-V-A into gain control voltages for the AGCs (Automatic Gain Control) of the two RF transmission power amplifiers.

In operation, the ATPC functionality of **fig.6a** automatically controls in a closed-loop scheme the transmission power on the relevant H/V channel in order to counteract all the causes of attenuation typical of a line-of-sight radio link, for example, rain and multipath. A fast closed-loop power control is needed to compensate selective multipath fading, while the rain fading is a slower phenomenon prevalent over 10 GHz. The present invention is only involved with rain fading. The ATPC functionality allows for the same availability obtained by transmitting the maximum power but, at the same time, limiting the transmission power during Clear air conditions thus reducing the produced interference to other links and saving power. The cochannel system of **fig.6a**, and more in general all the radio systems equipped with the ATPC, in clear air condition usually transmit at the minimum power $P_{MIN}$, because the power received is strong enough. When there is a fading condition and the received power drops below a given threshold ($P_{TH}^{ATPC}$), the ATPC loop instructs via the power control commands the relevant transmitter to increase the transmitted power in order to keep the received power as constant as possible and close to the given threshold ($P_{TH}^{ATPC}$).

With reference to **fig.6b**, the two transmission powers can be increased as far as they separately reach the maximum power $P_{MAX}$. The difference: ($P_{MAX}$ - $P_{MIN}$) is the 'ATPC Range'. During a rain fading the power received on the H polarisation, is lower than that received on the V polarisation, and decreases more rapidly as the rain increases. So, increasing the rain, the result of the two independent ATPCs is that the power of the H transmitter is increased faster than the power of the V transmitter. This behaviour is highlighted by different slopes of the H/V curves. So we have to take into account that the ATPC introduces automatically a positive difference $\Delta P_{ATPC}$ between the transmission powers $P_{TX}$H and $P_{TX}$V in order to optimally handles Clear air and initial rain conditions. Nevertheless, when the rain intensity increases over the ATPC saturation point for the H signal, the two polarizations are no more optimally handled for that given length of the link. The reason is mainly due to the side effect of the cross-polar interferences of the V channel on the H channel, which besides to be the most penalised one, is no more power increased by the ATPC beyond the saturation.

Although limited to counteract the only Rayleigh fading and not raining, US 5,392,459 (in the name of NEC Corporation) discloses a "POWER CONTROL IN MICROWAVE TRANSMISSION SYSTEM INCREASING POWER OF BOTH HORIZONTALLY AND VERTICALLY POLARIZED WAVES" which could be erroneously confused, at first sight, with the matter of the invention described later on. **Fig.7a** (reproduced) shows the ATPC control system of the cited invention applied to an XPIC system like the one of **fig.4**. By comparison with the prior art of **fig.6a,** it can be noticed that an unique ATPC control is adopted in the system of **fig.7a,** instead of the independent twos for the two orthogonal channels. This is perfectly in line with the subject-matter of the NEC's invention where: "The transmit powers of the polarized waves of the object frequency channel are simultaneously increased of the same entity when a drop of the receive signal level of at least one of the two polarized waves of the object frequency channel is detected". The aim is that of preventing the cross-polar interference otherwise due to the increase of only one polarized signal. With reference to **fig.7a,** the STATION-A includes an unique power control block CONTR-TX connected to the two variable RF power amplifiers of the two transmitters TRANS-H-A and TRANS-V-A. The CONTR-TX block receives a power control command PC_COM from a CONTR-RX power control block included in STATION-B. Each of the two receivers REC-H-B and REC-V-B includes: "a first level detector (the upper diode) for detecting the reception intensity of a microwave of the object frequency channel, and a second level detector (the lower diode preceded by a notch filter which stops the signal of the object frequency channel) for detecting the reception intensity of another frequency channel adjacent to the object frequency channel. All the level detectors forward their power measures to the common CONTR-RX block".

The successive **fig.7b** attempts to illustrate the behaviour of the power control system of **fig.7a,** in particular of the CONTR-RX block. As the power control system of **fig.7a** is fast enough for counteracting the Rayleigh fading, it also can be responsive for counteracting the rain fading if the case it needed. With reference to **fig.7b**, in case the rain attenuation drives under threshold the most penalized channel H, the two transmission powers $P_{TX}H$ and $P_{TX}V$ (logarithmic) are equally increased of a ΔP linearly increasing with the rain rate. A corresponding ΔP consequently appears between the reception powers $P_{RX}V$ and $P_{RX}H$ during all the power control range and remains in the saturation region. The ΔP gap on the reception power is enough to consider non optimal the handling of rain attenuation, either inside or outside the control range. The equal increase of H and V transmission powers for preventing cross-polar interferences due to Rayleigh fading generates as a consequence an overpower of the V channel other than the one strictly needed to counteract the rain fading. Besides the fact that overpower is costly, the major drawback is a considerable decreasing of the Cross Polar Isolation (XPI) and a worsening of the performance of the link with the rain attenuation.

## APPROACH TO THE TECHNICAL PROBLEM

From numerical results, coming from the propagation model described by the Rec. **ITU-R P 530**, it is evident that the polarization H is more disadvantaged than polarization V. This can be seen both in terms of attenuation (see **fig.1**), and in terms of interference of one polarization over the other (see **fig.2**). Since the overall performance of the link with a CC System is governed from the worst-case between the two polarizations, it results that the whole system performance undergoes the penalty on the H channel, also if the other polarization works well (see the margin balance of **fig.3**). As the direct attenuation is concerned, the H polarization will be always disadvantaged also in the presence of the XPIC device but, as the interference from orthogonal polarization is concerned, if the modulation format is not too complex (for example 32TCM or less) and the radio frequency band fall into the range for which the overall performance due to the radio propagation is governed from rain (above 10 GHz), it is possible to look for an alternative more convenient than XPIC device and without the drawbacks of the method disclosed in the NEC's patent. Furthermore, for more complex modulation formats less cumbersome XPIC devices are preferable or in alternative best performances with the same XPIC.

## OBJECTS OF THE INVENTION

The main object of the present invention is that to overcome the aforementioned drawbacks of the known art due to the rain attenuation and indicate an optimal transmission power setting method and system for a line-of-sight radio link employing cross-polarized cochannel signals.

Further object of the invention is that to dynamically control the optimal power setting in a closed-loop ATPC.

## SUMMARY AND ADVANTAGES OF THE INVENTION

To achieve said objects, a transmission power setting method for a line-of-sight radio link employing cross-polarized cochannel signals is claimed, as disclosed in the relevant method claims.

Is also claimed a transmission power setting system in a cross-polarization cochannel line-of-sight radio link operating in accordance with said method, as disclosed in the relevant system claims.

The original idea is to improve the performance of the radio link by introducing an optimum positive difference $\Delta P = P_{TX}H - P_{TX}V$, expressed in dB, between the power used on the H channel and that used on the V channel. This operation permits mainly to improve the $XPI_H$ of the factor ΔP [dB] (see Eq.7), which is the parameter that measures the interference from orthogonal polarization (see **fig.2**). Of course the $XPI_V$ will be consequently reduced of the same factor ΔP [dB], but for this parameter there is enough margin to do it. Consider as an example the balance between FM and RM shown in **fig.8**, where a value of ΔP = 3 dB has been used. As it can be seen comparing the results with those of **fig.3**, an increase of the overall length of the hop is obtained, passing from 10.67 to 13.37 km, so obtaining an improvement of near the 30%. Note that the distance resulting for the V polarization is 18.05 km, and so there is still margin to further improve the limit for ΔP, of course until to equal distance on both polarizations is reached. This means that given a fixed target for the performance in terms of unavailability of the hop (usually a value given is the 0.01% of the time corresponds to an unavailability lesser than 50 min/year), it is possible to planning a radio link over a longer distance. The question is faceable from another point of view: given the distance of the link, it is possible reducing the unavailability [min/year] of the link by the introduction of a ΔP between the powers on two polarizations. Of course for each situation there will be an optimum ΔP that permits of improve the performance of the H polarization without too penalizing the V. This optimum ΔP will depend on all the parameters involved in the link, and has to be evaluated for each situation.

Without ΔP the unavailability of the H channel is bigger than that of the V channel. If a ΔP > 0 is introduced between the H and V channels, the first unavailability reduces and the other increases, so that for a given ΔP the H and V channels will have equal unavailability. This ΔP value can be defined as "optimum ΔP": that is, for a given length of the link the optimum ΔP is the one for which the same unavailability exists for H and V polarizations. A relevant example of a margin Balance between FM and RM on a 18 km radio link with an optimum ΔP = 5.8 dB is shown in **fig.9** (the other parameters of radio system and antennas are the ones of the preceding **fig.8**). With a $\Delta P_{OPT}$ of 5.8 dB there is an unavailability of 0.0144% (corresponding to 76 min/year) for both H and V polarization and a maximum distance $D_{MAX}$ = 18 km, which is the same for the two H and V channels as it results from the FM and RM balance.

The optimum ΔP can be kept constant for all the transmission time (whether in 'clear air' or during rain conditions) or varied dynamically according to an embodiment of the invention addressed to radio systems with ATPC. The ATPC can be embodied for featuring the power setting either on the transmission or the reception side, indifferently. Diversely from the conventional ATPC systems, which saturate the transmission powers of both the orthogonal polarizations for large increasing of the rain intensity (see **fig.6b**), the ATPC of the present invention holds the optimum ΔP inside the power control saturation range of the horizontally polarized signal. (see **fig.14** and **fig.16**). This allow to keep the power levels of both H and V reception signals closer to each other even inside the saturation range of the ATPC, as required for an optimal handling of the rain attenuation able to provide satisfactory performance of the link. The ATPC of the present invention strongly differs from the ones disclosed in the NEC' s patent in which a ΔP between the H and V transmission powers is not implemented, so that an unfit ΔP appears between the reception signals.

## BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig.1,** already described, shows two H and V attenuation curves with fixed rain intensity;
- **fig.2**, already described, shows two H and V cross-polar isolation (XPI) curves with fixed rain intensity and given cross-polar depolarization $XPD_{TX}$ and $XPD_{RX}$;
- **fig.3**, already described, shows the curves of fading margin (FM) and required margin for rain (RM) for H and V polarizations, adopting a given set of system parameters and without XPIC device;
- **fig.4**, already described, shows a cochannel cross-polarization transmission system of the prior art equipped with XPIC devices;
- **fig.5**, already described, shows some FM and RM curves which illustrate the balance improvement due to the XPIC device with respect to the balance of **fig.3**;
- **fig.6a**, already described, shows the circuital architecture of a conventional ATPC system the transmission system of **fig.4** is equipped with;
- **fig.6b**, already described, shows the transmission and reception power diagrams vs. rain rate of the ATPC system of **fig.6a;**
- **fig.7a**, already described, shows the circuital architecture of an ATPC system in accordance with a cited US patent;
- **fig.7b**, already described, shows the possible transmission and reception power diagrams vs. rain rate of the ATPC system of **fig.7a;**
- **fig.8**, already described, shows some FM and RM curves in accordance with the present invention which illustrate the balance improvement due to a fixed 3 dB ΔP between H and V transmission powers with respect to the balance of **fig.3;**
- **fig.9**, already described, differs from the preceding **fig.8** for a further improvement of the balance due to the optimal value of ΔP;
- **fig.10** shows a circuital implementation for setting an optimum ΔP in a static manner in accordance with a preferred embodiment of the present invention;
- **fig.11** shows some curves illustrating the optimum static ΔP and the consequent link unavailability vs. distance between the antennas;
- **fig.12** shows the curves of signal to noise plus interference ratio vs. rain rate of V and H polarizations obtainable with the circuital implementation of **fig.10;**
- **fig.13** shows a circuital implementation according to a first variant of the invention for ATPC featuring the control at the transmission side;
- **fig.14** shows the transmission and reception power diagrams vs. rain rate obtainable with the circuital implementation of the preceding **fig.13;**
- **fig.15** shows a circuital implementation according to a second variant of the invention for ATPC featuring the control at the reception side;
- **fig.16** shows the transmission and reception power diagrams vs. rain rate obtainable with the circuital implementation of the preceding **fig.15**;
- **fig.17** shows the curves of V and H reception powers vs. rain rate with ideal ATPC;

- **fig.18** shows the curves of V and H transmission powers vs. rain rate with ideal ATPC at the reception side;
- **fig.19** shows the curves of signal to noise plus interference ratio vs. rain rate of V and H polarizations with ideal ATPC;
- **fig.20** shows the curves of V and H transmission powers vs. rain rate with non ideal ATPC at the transmission side (plus ideal by comparison);
- **fig.21** shows the curves of V and H reception powers vs. rain rate with non ideal ATPC at the transmission side; and
- **fig.22** shows the curves of signal to noise plus interference ratio vs. rain rate of V and H polarizations with non ideal ATPC at the transmission side.

## DETAILED DESCRIPTION OF SOME PREFERRED EMBODIMENTS OF THE INVENTION

It is appropriate to distinguish two kinds of radio systems, according to the fact that they use, or not, the ATPC (Automatic Transmission Power Control). In **fig.10** a 'static' (without ATPC) power setting system in accordance with a preferred embodiment of the invention is depicted. The power setting system of **fig.10** gives the best possible performance in terms of unavailability to a cochannel system without XPIC, although the use of the XPIC for high level modulations is possible and further improves the overall performances.

With reference to **fig.10**, a partial representation of STATION-A (**fig.4**) including the two TRANS-H-A and TRANS-V-A transmitters and a functional block named CONTROL LOGIC is shown. The two transmitters include a variable-gain RF power amplifier and an envelope detector diode D-H and D-V, according to the H, V notation, for detecting the level of the relevant transmission signal. The control logic block receives an optimum ΔP value (expressed in dB) together with the voltages representing the two envelopes detected on the H and V channels, and calculates two control signals for regulating the gain of the two RF power amplifiers in order Lo keep constant, and equal to the optimum ΔP, the difference between the transmission powers (expressed in dB) on the H and V channels.

In operation, the optimum 'static' ΔP is calculated in advance (off-line) during the planning of the link, and successively kept constant for all the transmission time. The limitation to the optimum ΔP value stated in Eq.16 takes into account rain and 'clear air' conditions. In order to determine the law for the optimum 'static' ΔP it is necessary to consider that in conditions of 'clear air' the value assigned to ΔP cannot be too large, otherwise the interference of the H channel on the V should become too strong. As previously said, the power on the V channel must be ΔP dB always lower than that on the H channel, with that the $XPI_V$ on the V channel (defined as the C/I when the interfering signal is that on the H channel) is reduced consequently. Then from (Eq.12) the following inequality is valid:

$$XPI_V = XPD_{TOT}^{ANT} - \Delta P > (\left(\frac{S}{N}\right)_{th} + 7) \qquad (14)$$

where $XPD_{TOT}^{ANT}$ is the total XPD due to the two antennas (transmitter and receiver), and corresponds to the XPI for both polarisations, in conditions of 'clear air'. Therefore, the following maximum value for ΔP can be defined as a function of the two antenna characteristics and of the receiver threshold:

$$\Delta P_{MAX} = XPD_{TOT}^{ANT} - (\left(\frac{S}{N}\right)_{th} + 7) = = 10 \cdot \log_{10}(10^{-\frac{XPD_{TX}}{10}} + 10^{-\frac{XPD_{RX}}{10}}) - (\left(\frac{S}{N}\right)_{th} + 7) \qquad (Eq.15)$$

It is clear that, if antennas with a better XPD are used, the $\Delta P_{MAX}$ will increase consequently. After having defined the $\Delta P_{OPT}$ and the $\Delta P_{MAX}$ in 'clear air' condition, and for given parameters of the two antennas and the system, a curve of $\Delta P_{OPT}$ versus distance D [km] can be calculated; the result is shown in **fig.11**, obtained with the parameters indicated in the LEGENDA. With reference to **fig.11** the following curves are reported:

- $\Delta P_{OPT}$ versus distance D [km] ;
- $\Delta P_{MAX}$ for 'clear air conditions' = 7 dB (as it results from XPD values of the antennas, and from the receiver threshold);
- unavailability versus distance D [km], without any ΔP between the transmission powers;
- unavailability versus distance D [km], with the optimum ΔP ($\Delta P_{OPT}$) .

As shown in **fig.11,** assuming distances lower than 7.5 [km], $\Delta P_{OPT}$ is higher than $\Delta P_{MAX}$, otherwise it is lower. This is not the rule; it depends from the data assumed for the radio link. For example if we consider a more rainy zone (with Rain Rate higher than 42 mm/h) the values of $\Delta P_{OPT}$ will increase. In general, three cases are possible:

1. The curve of $\Delta P_{OPT}$ versus D is always below $\Delta P_{MAX}$.
2. The curve of $\Delta P_{OPT}$ versus D is always above $\Delta P_{MAX}$.
3. The curve of $\Delta P_{OPT}$ versus D intersects $\Delta P_{MAX}$ at only a certain value.

On the bases of the possible cases, we can define a curve for representing $\Delta P_{NO\text{-}ATPC}$ =ΔP' in the following way:

$$\Delta P^{'}(D) = MIN\,(\Delta P_{OPT}(D), \Delta P_{MAX}) \qquad (16)$$

After having calculated the $\Delta P_{OPT}$ versus distance D [km] , we know that on average, for that geographic zone, the value of $\Delta P_{OPT}$ so introduced, permits to optimise the time of outage on the two polarisations. However, the manner to use this value depends from the radio system we are considering.

Once $\Delta P_{OPT}$ is set by the circuitry of **fig.10,** the ratio s/(n+i) versus rain rate can be evaluated for the two polarisations. As an example consider the curves in **fig.12** calculated using the parameters indicated in the LEGENDA. The vale of $\Delta P_{OPT}$ = 6.6 dB results from the optimisation over a distance D = 10 km (see **fig.11**). Note that an unavailability of 20 min/y corresponds to the $\Delta P_{OPT}$, and this value is used to calculate the direct attenuations and depolarizations due to rain. Note also that the two curves of **fig.12** intersect only for Rain Rate = 42 mm/h, which is the value of the rain rate corresponding to the target unavailability point in the link budget; and the corresponding s/(n+i) ratio is 16 dB, which is the BER threshold for the radio system. This suggests a way to calculate $\Delta P_{OPT}$ based on equating the s/(n+i) ratio of both the cross-polarized reception signals with the target parameters.

Another preferred embodiment of the invention covers systems with ATPC; the aims of this functionality has been described in the introduction. Then, to fully exploit the advantages of the optimum ΔP even in ATPC systems, the parameters of the ATPC shall be set in the manner to obtain the following behaviour for a given distance:

- in clear air the two channels have the same (minimum) power;
- at maximum fading, we would like the ATPC to bring the system into the same optimal conditions of a system without ATPC and therefore it shall bound to $\Delta P_{OPT}$ ($\Delta P_{MAX}$ was only used in systems without ATPC to cope with clear air interference and therefore shall not be applied to ATPC systems). The following equation applies, where $\Delta P_{OPT}$ is the value calculated as above (see **fig.11**) for a given distance, rain zone, and system gain parameters.

$$\Delta P_{MAX}^{ATPC} = \Delta P_{OPT} \qquad (17)$$

This can be done in several ways. The most straightforward approach is to bound the maximum transmitted power of the V channel in the ATPC system to be $\Delta P_{OPT}$ below the power of the H channel (thus preventing V channel to increase its power up to the maximum). Another way is to act in the receiver to control the received power of H and V channels to be the same. This second approach gives slightly different results but the performances are very similar. The most straightforward approach correspond to a first variant of the invention embodied for ATPC, as shown in **fig. 13**, while the second approach corresponds to a second variant shown in **fig.15**.

With reference to **fig.13** (first variant), a partial representation of STATION-A and STATION-B of **fig.4** is shown. The partial representation of STATION-A includes the two transmitters TRANS-H-A and TRANS-V-A and a sole control block named CONTR-TX. The two transmitters each includes a variable-gain RF power amplifier. The partial representation of STATION-B includes the two receivers REC-H-B and REC-V-B, each of them includes an envelope detector diode followed by a control block. The two diodes are labelled D-H and D-V, and the control blocks are named CONTR-RX-H and CONTR-RX-V (in accordance with the H, V notation), the latter generate two respective commands PW-COM-H and PW-COM-V which include the corrections sent to the CONTR-TX block inside STATION-A (via two feedback radio cannels) for controlling the power level of the H and V transmission signals. The two commands PW-COM-H and PW-COM-V are generated independently with each other, as in conventional ATPC, by comparing the detected envelopes with the ATPC threshold. The control block CONTR-TX receives the two commands PW-COM-H and PW-COM-V and the optimum value $\Delta P_{OPT}$ (calculated in advance), filters the received corrections, and generates two control signals for regulating the AGCs of the two RF power amplifiers, in order to operate as the $P_{TX}$H and $P_{TX}$V curves versus rain rate indicated in **fig.14**.

With reference to **fig.15** (second variant), a partial representation of STATION-A and STATION-B of **fig.4** is shown. The partial representation of STATION-A includes the two TRANS-H-A and TRANS-V-A transmitters. The two transmitters include a variable-gain RF power amplifier and a and a control block. The two control blocks are named CONTR-TX-H and CONTR-TX-V, accordingly. The partial representation of STATION-B includes the two receivers REC-H-B and REC-V-B and a sole control block named CONTR-RX. The two receivers each includes an envelope detector diode for sensing the power level of the reception signal. The two diodes are labelled D-H and D-V (in accordance with the H, V notation). The detected envelopes are sent to the control block CONTR-RX, that calculates in correspondence two power control commands PC_COM_H and PC_COM_V directed (via two feedback radio channels) to the control blocks CONTR-TX-H and CONTR-TX-V, respectively. The control block CONTR-RX calculates instant by instant the difference $\Delta P$ between each detected envelope. The differences are filtered and translated into power control commands PC_COM_H and PC_COM_V suitable for equating the reception powers on the H and V channels, as indicated by the $P_{RX}H$ and $P_{RX}V$ curves versus rain rate of **fig.16**. The two blocks CONTR-TX-H and CONTR-TX-V act on the AGCs of the two RF power amplifiers in accordance with the received power control commands, in order to obtain the $P_{TX}H$ and $P_{TX}V$ curves versus rain rate indicated in **fig.16**. It is of course possible, though probably useless, to distribute the filtering function between transmitter and receiver.

The description continues with some arguments on an 'Ideal ATPC' developed for a better understanding of the two ATPC variants really implemented; the successive figures support these arguments.

Given a radio link of length D [km] and a rain rate R [mm/h], and not considering the limitation imposed by $\Delta P_{MAX}$ with the clear air condition, the value $\Delta P_{OPT}$ is such that if it is applied to the transmitted powers, so that: $P_{TX}H = P_{TX}V + \Delta P_{OPT}$, then the two signals transmitted on the two polarisations reach the BER threshold with the same probability of unavailability U [%]. Therefore, the first request for the ATPC mechanism could be that when the radio link reaches the BER threshold for that given rain rate R (function of rain zone and target unavailability), then the difference between the transmitted powers would be exactly $\Delta P_{OPT}$. Nevertheless, we have to consider also the behaviour of the ATPC when the intensity of the rain is increasing from 0 to R. To do this, we can define 'Ideal ATPC' the one which, for each value of rain rate from 0 to R, optimised the s/(n+i) by making equals the two ratios:

$$\left(\frac{s}{n+i}\right)_H = \left(\frac{s}{n+i}\right)_V \qquad (18)$$

where:

$$\left(\frac{s}{n+i}\right)_H = \left(\frac{{p_{RX}}^H}{n+i_{V\rightarrow H}}\right)$$

$$\left(\frac{s}{n+i}\right)_V = \left(\frac{{p_{RX}}^V}{n+i_{H\rightarrow V}}\right)$$

This condition equalizes (and optimises) the performance of the H and V channels, instant by instant, during the rain fading process; when the rain rate reaches the target value R, the two ratios are equals and are the $(S/N)_{th}$ [dB]. It's known that the H direct attenuation is higher than that of the V (see **fig.1**), so to describe the behaviour of the 'ideal ATPC' it is firstly assumed that a standard ATPC works to control the power received on the H polarization, with these parameters: $P_{th}^{ATPC}$ = -72 dBm; $PT_{MAX}^{ATPC}$ = 18 dBm. Then the ideal received power for the V polarization has been calculated following (Eq.18). As it can be seen in **fig.17,** with the parameters indicated in the LEGENDA, the two received powers $P_{RX}H$ and $P_{RX}V$ are very close to each other for all the values of the rain rate (the maximum difference can be evaluated as less than 0.5 dB). This also implicates equal interference conditions on the two H and V channels. In **fig. 18** the two transmission powers $P_{TX}H$ and $P_{TX}V$ versus rain rate for the ideal ATPC, which have been calculated starting from the detected reception powers, are shown. Please note that the ideal condition would require that $P_{MIN}$ of V channel be lower than 8 dBm, thus requesting an ATPC range, larger than the actual one. In **fig.19** the s/(n+i) ratio versus rain rate corresponding to ideal ATPC is shown; the ratio is the same for the two polarizations, of course.

A possible schema very close to 'ideal ATPC' is the one of the second variant shown in **fig.15.** The only exception between **fig.18** and **16**, as far as $P_{TX}H$ and $P_{TX}V$ curves are concerned, is represented by the minimum transmission power $P_{MIN}$. In the real implementation of the two variants there is a minimum power $P_{MIN}$ = 8 dBm (so as a maximum transmission power $P_{MAX}$ = 18 dBm) and the V channel would never go below $P_{MIN}$. The deviation from ideality visible in **fig.15** is not relevant, because it occurs in low rain fading area where the s/(n+i) ratio is far from threshold, so that the non ideal behaviour has no consequences on the performance. Apart from this, the behaviour of the circuital embodiment of **fig.15** is very close to the ideal at rain rates above 30 mm/h.

Another possible implementation is the one of the first variant shown in **fig.13.** The control block CONTR-TX operates on the H channel as usual and saturates the V channel at a maximum power $\Delta P_{OPT}$ [dB] below the maximum power $P_{MAX}$ of the H channel. Therefore a non ideal behaviour is introduced as shown in **fig.20** at rain rates above 35 mm/h. There is always the non ideal behaviour due to $P_{MIN}$, as in the second variant, which is not particularly important in this context. The specified behaviour of the real transmission power $P_{TX}V$ is therefore defined as follows with respect to ideal behaviour:

- $P_{TX}V$ ideal < $P_{MIN}$: $P_{TX}V$ = P min;
- $P_{MIN}$ < $P_{TX}V$ ideal < $P_{TX}H_{MAX} - \Delta P_{OPT}$: $P_{TX}V = P_{TX}V$ ideal;
- ideal > $P_{TX}H_{MAX} - \Delta P_{OPT}$: $P_{TX}V = P_{TX}H_{MAX} - \Delta P_{OPT}$.

In **fig.21** the curves of the reception powers $P_{RX}V$ and $P_{RX}H$ versus rain rate relevant to the first variant are reported. In **fig.22** the curves of the H and V s/(n+i) ratios versus rain rate relevant to the first variant are reported.

## Claims

1. A transmission power setting method for a cross-polarization cochannel line-of-sight radio link subjected to rain attenuation, **characterised in that**: an optimum positive difference value ($\Delta P_{OPT}$) is set between the logarithms of the transmission powers of the horizontally (H) and vertically (V) polarized signals; said optimum difference ($\Delta P_{OPT}$) being calculated in order to have equal probability of unavailability of the link for both cross-polarized signals (H, V), given the length of the link, the rain zone and the corresponding threshold for the signal to noise plus interference ratio.

2. The method of the preceding claim, **characterised in that** said optimum positive difference ($\Delta P_{OPT}$) is limited to be equal to or lower than a maximum difference value ($\Delta P_{MAX}$) calculated for a clear air condition.

3. The method of claim 1 or 2, **characterised in that** said given length of the link is a maximum length ($D_{MAX}$) calculated by forcing to be equal the balances between the fading margin (FM) and the required margin for raining (RM) versus the length of the link of the horizontally and vertically polarized signals (H, V).

4. The method of one of the preceding claims, **characterised in that** said optimum positive difference value ($\Delta P_{OPT}$) is calculated in advance and hold on for all the transmission time.

5. The method of claim 1, **characterised in that** said optimum positive difference value ($\Delta P_{OPT}$) is set in conjunction with a closed-loop power control acting on both the cross-polarized transmission signals (H, V).

6. The method of the preceding claim, **characterised in that** a minimum transmission power (PMin) compatible with the maximum transmissible power (PMax) and the width of the power control range is set for both the cross-polarized signals (H, V).

7. The method of claim 5 or 6, **characterised in that** the power level of the vertically polarized transmission signal ($P_{TXV}$) is kept constant when the summation of it with said optimum positive difference ($\Delta P_{OPT}$) calculated in advance reaches the maximum power ($P_{MAX}$) permitted to the horizontally polarized transmission signal ($P_{TX}H$).

8. The method of claim 5 or 6, **characterised in that** said optimum positive difference value ($\Delta P_{OPT}$) is obtained by equating the signal to noise plus interference ratios of the two cross-polarized reception signals (H, V).

9. A transmission power setting system for a cross-polarization cochannel line-of-sight radio link subjected to rain attenuation, **characterised in that**:

includes control means (CONTROL LOGIC, CONTR-TX, CONTR-RX-H, CONTR-RX-V, CONTR-RX, CONTR-TX-H, CONTR-TX-V) for setting an optimum positive difference ($\Delta P_{OPT}$) value between the logarithms of the transmission power of the horizontally (H) and vertically (V) polarized signals in order to have equal probability of unavailability of the link for both cross-polarized signals (H, V), given the length of the link, the rain zone, and the corresponding threshold for the signal to noise plus interference ratio.

**10.** The system of the preceding claim, **characterised in that** said control means (CONTROL LOGIC) are placed in the transmitting station (STATION-A) for receiving the measures of the transmission power levels ($P_{TX}H$, $P_{TX}V$) of the horizontally (H) and vertically (V) polarized signals at the output of relevant detecting means (D-H, D-V), and further receiving the value of said optimum positive difference ($AP_{OPT}$) that is calculated in advance, and generating in correspondence two gain control commands directed to the transmitters of the cross-polarized signals (TRANS-H-A, TRANS-V-A) in order to achieve said optimum difference ($\Delta P_{OPT}$) and kept it constant for all the transmission time.

**11.** The system of claim 9, **characterised in that** said control means (CONTR-TX, CONTR-RX-H, CONTR-RX-V) are subdivided in two parts, a first one (CONTR-RX-H, CONTR-RX-V) placed in the receiving station (STATION-B) and a second one (CONTR-TX) in the transmitting station (STATION-A) in order to perform a closed-loop power control having a given dynamic power range:

- the first control means (CONTR-RX-H, CONTR-RX-V) being arranged for receiving the measures of the reception power levels ($P_{RX}H$, $P_{RX}V$) of the horizontally (H) and vertically (V) polarized signals at the output of relevant detecting means (D-H, D-V) and tracking the differences between each measure and an intervening power threshold, in order to generate relevant corrections (PW-COM-H, PW-COM-V) to the transmission powers;
- the second control means (CONTR-TX) being arranged for dynamically controlling the power level of the cross-polarized transmission signals ($P_{TX}H$, $P_{TX}V$) upon the reception of said corrections (PW-COM-H, PW-COM-V) and said optimum value of the positive difference ($\Delta P_{OPT}$) that is calculated in advance.

**12.** The system of claim 11, **characterised in that** the second control means (CONTR-TX) being further arranged for holding on the power level of the vertically polarized transmission signal ($P_{TX}V$) when the summation of it with said optimum value of the positive difference ($AP_{OPT}$) reaches the maximum power ($P_{MAX}$) permitted to the horizontally polarized transmission signal ($P_{TX}H$).

**13.** The system of claim 11 or 12, **characterised in that** said the second control means (CONTR-TX) include filtering means for averaging in time said corrections (PW-COM-H, PW-COM-V).

**14.** The system of claim 9, **characterised in that** said control means (CONTR-RX, CONTR-TX-H, CONTR-TX-V) are subdivided in two parts, a first one (CONTR-RX) placed in the receiving station (STATION-B) and a second one (CONTR-TX-H, CONTR-TX-V) in the transmitting station (STATION-A) in order to perform a closed-loop power control having a given dynamic power range:

- the first control means (CONTR-RX) being arranged for receiving the measures of the reception power levels ($P_{RX}H$, $P_{RX}V$) of the horizontally (H) and vertically (V) polarized signals at the output of relevant detecting means (D-H, D-V) and generating respective power control commands (PC-COM-H, PC-COM-V) including relevant corrections to the corresponding transmission powers ($P_{TX}H$, $P_{TX}V$) for dynamically equating the reception power levels ($P_{RX}H$, $P_{RX}V$) ;
- the second control means (CONTR-TX-H, CONTR-TX-V) being arranged for acting on the gain of the two transmitters (TRANS-H-A, TRANS-V-A) of the cross-polarized signals (H, V) accordingly to said power control commands (PC-COM-H, PC-COM-V).

**15.** The system of claim 13, **characterised in that** said first control means (CONTR-RX) include filtering means for averaging in time said power control commands (PC-COM-H, PC-COM-V).

## Patentansprüche

**1.** Sendeleistungs-Einstellverfahren für eine Kreuzpolarisations-Cokanal-Line-of-Sight-Funkstrecke, die Regendämpfung ausgesetzt ist, **dadurch gekennzeichnet, dass** ein optimaler positiver Differenzwert ($\Delta P_{OPT}$) zwischen den Logarithmen der Sendeleistungen der horizontal (H) und vertikal (V) polarisierten Signale eingestellt wird; wobei

die optimale Differenz ($\Delta P_{OPT}$) berechnet wird, um über gleiche Wahrscheinlichkeit von Unverfügbarkeit der Strecke für beide kreuzpolarisierte Signale (H, V) bei gegebener Länge der Strecke, der Regenzone und der entsprechenden Schwelle für das Verhältnis von Signal zu Rauschen plus Störungen zu verfügen.

**2.** Verfahren des vorherigen Anspruchs, **dadurch gekennzeichnet, dass** die optimale positive Differenz ($\Delta P_{OPT}$) auf kleiner oder gleich einem maximalen Differenzwert ($\Delta P_{MAX}$) begrenzt wird, der für eine Klarluftbedingung berechnet wird.

**3.** Verfahren nach Anspruch 1 oder 2, **dadurch gekennzeichnet, dass** die gegebene Länge der Strecke eine maximale Länge ($D_{MAX}$) ist, die berechnet wird durch Erzwingen von Gleichheit der Gleichgewichte zwischen der Fading-Reserve (FM) und der erforderlichen Reserve für Regen (RM) gegenüber der Länge der Strecke der horizontal und vertikal polarisierten Signale (H, V).

**4.** Verfahren nach einem der vorhergehenden Ansprüche, **dadurch gekennzeichnet, dass** der optimale positive Differenzwert ($\Delta P_{OPT}$) im Voraus berechnet wird und für die gesamte Übertragungszeit gehalten wird.

**5.** Verfahren nach Anspruch 1, **dadurch gekennzeichnet, dass** der optimale positive Differenzwert ($\Delta P_{OPT}$) in Verbindung mit einer Leistungsregelschleife eingestellt wird, die an beiden kreuzpolarisierten Übertragungssignalen (H, V) wirkt.

**6.** Verfahren des vorherigen Anspruchs, **dadurch gekennzeichnet, dass** eine mit der maximal sendbaren Leistung (PMax) und Breite des Leistungsregelbereichs kompatible minimale Sendeleistung (PMin) für beide kreuzpolarisierte Signale (H, V) eingestellt wird.

**7.** Verfahren nach Anspruch 5 oder 6, **dadurch gekennzeichnet, dass** der Leistungspegel des vertikal polarisierten Übertragungssignals ($P_{TX}V$) konstant gehalten wird, wenn seine Summierung mit der im Voraus berechneten optimalen positiven Differenz ($\Delta P_{OPT}$) die maximale Leistung ($P_{MAX}$) erreicht, die dem horizontal polarisierten Übertragungssignal erlaubt wird ($P_{TX}H$).

**8.** Verfahren nach Anspruch 5 oder 6, **dadurch gekennzeichnet, dass** der optimale positive Differenzwert ($\Delta P_{OPT}$) durch Gleichsetzen des Verhältnisses von Signal zu Rauschen plus Störungen der beiden kreuzpolarisierten Empfangssignale (H, V) erhalten wird.

**9.** Sendeleistungs-Einstellsystem für eine Kreuzpolarisations-Cokanal-Line-of-Sight-Funkstrecke, die Regendämpfung ausgesetzt ist, **dadurch gekennzeichnet, dass** es Folgendes umfasst: Steuermittel (CONTROL LOGIC, CONTR-TX, CONTR-RX-H, CONTR-RX-V, CONTR-RX, CONTR-TX-H, CONTR-TX-V) zum Einstellen eines optimalen positiven Differenzwerts ($\Delta P_{OPT}$) zwischen den Logarithmen der Sendeleistung der horizontal (H) und vertikal (V) polarisierten Signale, um über gleiche Wahrscheinlichkeit von Unverfügbarkeit der Strecke für beide kreuzpolarisierte Signale (H, V) bei gegebener Länge der Strecke, der Regenzone und der entsprechenden Schwelle für das Verhältnis von Signal zu Rauschen plus Störungen zu verfügen.

**10.** System des vorherigen Anspruchs, **dadurch gekennzeichnet, dass** die Steuermittel (CONTROL LOGIC) in der Sendestation (STATION-A) angeordnet werden, um die Maße der Sendeleistungspegel ($P_{TX}H$, $P_{TX}V$) der horizontal (H) und vertikal (V) polarisierten Signale an dem Ausgang der relevanten Detektionsmittel (D-H, D-V) zu empfangen, und ferner den Wert der optimalen positiven Differenz ($\Delta P_{OPT}$), die im Voraus berechnet wird, zu empfangen und entsprechend zwei Verstärkungsregelbefehle zu erzeugen, die zu den Sendern der kreuzpolarisierten Signale (TRANS-H-A, TRANS-V-A) geleitet werden, um die optimale Differenz ($\Delta P_{OPT}$) zu erzielen und sie für die gesamte Übertragungszeit konstant zu halten.

**11.** System nach Anspruch 9, **dadurch gekennzeichnet, dass** die Steuermittel (CONTR-TX, CONTR-RX-H, CONTR-RX-V) in zwei Teile aufgeteilt sind, einen ersten (CONTR-RX-H, CONTR-RX-V), der in der Empfangsstation (STATION-B) angeordnet ist, und einen zweiten (CONTR-TX) in der Sendestation (STATION-A), um eine Leistungsregelschleife auszuführen, die einen gegebenen dynamischen Leistungsumfang aufweist:

- wobei die ersten Steuermittel (CONTR-RX-H, CONTR-RX-V) dafür ausgelegt sind, die Maße der Empfangsleistungspegel ($P_{RX}H$, $P_{RX}V$) der horizontal (H) und vertikal (V) polarisierten Signale an dem Ausgang relevanter Detektionsmittel (D-H, D-V) zu empfangen und die Differenzen zwischen jedem Maß und einer Zwischenleistungsschwelle zu verfolgen, um relevante Korrekturen (PW-COM-H, PW-COM-V) an den Sendeleistungen zu erzeugen;
- wobei die zweiten Steuermittel (CONTR-TX) dafür ausgelegt sind, den Leistungspegel der kreuzpolarisierten Übertragungssignale ($P_{TX}H$, $P_{TX}V$) auf den Empfang der Korrekturen (PW-COM-H, PW-COM-V) und den optimalen Wert der positiven Differenz ($\Delta P_{OPT}$), der im Voraus berechnet wird, hin dynamisch zu steuern.

**12.** System nach Anspruch 11, **dadurch gekennzeichnet, dass** die zweiten Steuermittel (CONTR-TX) ferner dafür ausgelegt sind, den Leistungspegel des vertikal polarisierten Übertragungssignals ($P_{TX}V$) aufrechtzuerhalten, wenn seine Summierung mit dem optimalen Wert der positiven Differenz ($\Delta P_{OPT}$) die maximale Leistung ($P_{MAX}$) erreicht, die dem horizontal polarisierten Übertragungssignal erlaubt wird ($P_{TX}H$) .

**13.** System nach Anspruch 11 oder 12, **dadurch gekennzeichnet, dass** die zweiten Steuermittel (CONTR-TX) Filtermittel zur zeitlichen Mittelung der Korrekturen (PW-COM-H, PW-COM-V) umfassen.

**14.** System nach Anspruch 9, **dadurch gekennzeichnet, dass** die Steuermittel (CONTR-RX, CONTR-TX-H, CONTR-TX-V) in zwei Teile aufgeteilt sind, einen ersten (CONTR-RX), der in der Empfangsstation (STATION-B) angeordnet ist, und einen zweiten (CONTR-TX-H, CONTR-TX-V) in der Sendestation (STATION-A), um eine Leistungsregelschleife auszuführen, die einen gegebenen dynamischen Leistungsumfang aufweist:

- wobei die ersten Steuermittel (CONTR-RX) dafür ausgelegt sind, die Maße der Empfangsleistungspegel ($P_{RX}H$, $P_{RX}V$) der horizontal (H) und vertikal (V) polarisierten Signale am Ausgang der relevanten Detektionsmittel (D-H, D-V) zu empfangen und jeweilige Leistungsregelbefehle (PC-COM-H, PC-COM-V) zu erzeugen, die relevante Korrekturen an den entsprechenden Sendeleistungen ($P_{TX}H$, $P_{TX}V$) zum dynamischen Gleichsetzen der Empfangsleistungspegel ($P_{RX}H$, $P_{RX}V$) umfassen;
- wobei die zweiten Steuermittel (CONTR-TX-H, CONTR-TX-V) dafür ausgelegt sind, an der Verstärkung der beiden Sender (TRANS-H-A, TRANS-V-A) der kreuzpolarisierten Signale (H, V) gemäß den Leistungsregelbefehlen (PC-COM-H, PC-COM-V) zu wirken.

**15.** System nach Anspruch 13, **dadurch gekennzeichnet, dass** die ersten Steuermittel (CONTR-RX) Filtermittel zum zeitlichen Mitteln der Leistungsregelbefehle (PC-COM-H, PC-COM-V) umfassen.

**Revendications**

**1.** Procédé de réglage de puissance de transmission pour une liaison radio à visibilité directe sur canal commun à polarisation croisée soumise à un affaiblissement dû à la pluie, **caractérisé en ce que:** une valeur de différence positive optimale ($\Delta P_{OPT}$) est fixée entre les logarithmes des puissances de transmission des signaux à polarisation horizontale (H) et verticale (V) ; ladite différence optimale ($\Delta P_{OPT}$) étant calculée afin d'avoir une probabilité égale d'indisponibilité de la liaison pour les deux signaux à polarisation croisée (H, V), compte tenu de la longueur de la liaison, de la zone de pluie et du seuil correspondant pour le rapport signal sur bruit plus interférence.

**2.** Procédé selon la revendication précédente, **caractérisé en ce que** ladite différence positive optimale ($\Delta P_{OPT}$) est limitée de façon à être égale ou inférieure à une valeur de différence maximum ($\Delta P_{Max}$) calculée pour une condition d'air clair.

**3.** Procédé selon la revendication 1 ou 2, **caractérisé en ce que** ladite longueur donnée de la liaison est une longueur maximum ($D_{max}$) calculée par forçage pour être égale aux équilibres entre la marge de protection contre les évanouissements (FM) et la marge requise pour la pluie (RM) contre la longueur de la liaison des signaux à polarisation horizontale et verticale (H, V).

**4.** Procédé selon l'une des revendications précédentes, **caractérisé en ce que** ladite valeur de différence positive optimale ($\Delta P_{OPT}$) est calculée à l'avance et maintenue sur toute la durée de transmission.

**5.** Procédé selon la revendication 1, **caractérisé en ce que** ladite valeur de différence positive optimale ($\Delta P_{OPT}$) est fixée en conjonction avec une commande de puissance en boucle fermée agissant sur les deux signaux de transmission à polarisation croisée (H, V).

**6.** Procédé selon la revendication précédente, **caractérisé en ce qu'**une puissance de transmission minimum (PMin) compatible avec la puissance transmissible maximum (PMax) et la largeur de la plage de commande de puissance est fixée pour les deux signaux à polarisation croisée (H, V).

7. Procédé selon la revendication 5 ou 6, **caractérisé en ce que** le niveau de puissance du signal de transmission à polarisation verticale ($P_{TX}V$) est maintenu constant lorsque la sommation de celui-ci avec ladite différence positive optimale ($\Delta_{OPT}$) calculée à l'avance atteint la puissance maximum ($P_{Max}$) permise pour le signal de transmission à polarisation horizontale ($P_{TX}H$) .

8. Procédé selon la revendication 5 ou 6, **caractérisé en ce que** ladite valeur de différence positive optimale ($\Delta P_{OPT}$) est obtenue en égalisant les rapports signal sur bruit plus interférence des deux signaux de réception à polarisation croisée (H, V).

9. Système de réglage de puissance de transmission pour une liaison radio à visibilité directe sur canal commun à polarisation croisée soumise à un affaiblissement dû à la pluie, **caractérisé en ce que:** il inclut des moyens de commande (CONTROL LOGIC, CONTR-TX, CONTR-RX-H, CONTR-RX-V, CONTR-RX, CONTR-TX-H, CONTR-TX-V) pour fixer une valeur de différence positive optimale ($\Delta P_{OPT}$) entre les logarithmes de la puissance de transmission des signaux à polarisation horizontale (H) et verticale (V) afin d'avoir une probabilité égale d'indisponibilité de la liaison pour les deux signaux à polarisation croisée (H, V), compte tenu de la longueur de la liaison, de la zone de pluie et du seuil correspondant pour le rapport signal sur bruit plus interférence.

10. Système selon la revendication précédente, **caractérisé en ce que** ledit moyen de commande (CONTROL LOGIC) est placé dans la station de transmission (STATION-A) pour recevoir les mesures des niveaux de puissance de transmission ($P_{TX}H$, $P_{TX}V$) des signaux à polarisation horizontale (H) et verticale (V) à la sortie de moyens de détection pertinents (D-H, D-V), et recevoir en outre la valeur de ladite différence positive optimale ($\Delta P_{OPT}$) qui est calculée à l'avance, et générer en correspondance deux commandes de contrôle de gain dirigées vers les émetteurs-récepteurs des signaux à polarisation orthogonale (TRANS-H-A, TRANS-V-A) afin de réaliser ladite différence optimale ($\Delta P_{OPT}$) et la maintenir constante sur toute la durée de la transmission.

11. Système selon la revendication 9, **caractérisé en ce que** lesdits moyens de commande (CONTR-TX, CONTR-RX-H, CONTR-RX-V) sont subdivisés en deux parties, une première (CONTR-RX-H, CONTR-RX-V) placée dans la station de réception (STATION-B) et une deuxième (CONTR-TX) dans la station de transmission (STATION-A) afin d'effectuer une commande de puissance en boucle fermée ayant une plage de puissance dynamique donnée :

- les premiers moyens de commande (CONTR-RX-H, CONTR-RX-V) étant agencés de façon à recevoir les mesures des niveaux de puissance de réception ($P_{RX}H$, $P_{RX}V$) des signaux à polarisation horizontale (H) et verticale (V) à la sortie des moyens de détection pertinents (D-H, D-V) et suivre les différences entre chaque mesure et un seuil de puissance intermédiaire, afin de générer des corrections pertinentes (PW-COM-H, PW-COM-V) des puissances de transmission ;
- le deuxième moyen de commande (CONTR-TX) étant agencé pour commander dynamiquement le niveau de puissance des signaux de transmission à polarisation croisée ($P_{TX}H$, $P_{TX}V$) à la réception desdites corrections (PW-COM-H, PW-COM-V) et de ladite valeur optimale de la différence positive ($\Delta P_{OPT}$) qui est calculée à l'avance.

12. Système selon la revendication 11, **caractérisé en ce que** le deuxième moyen de commande (CONTR-TX) étant en outre agencé pour maintenir le niveau de puissance du signal de transmission à polarisation verticale ($P_{TX}V$) lorsque la sommation de celui-ci avec ladite valeur optimale de la différence positive ($\Delta P_{OPT}$) atteint la puissance maximum ($P_{MAX}$) permise pour le signal de transmission à polarisation horizontale ($P_{TX}H$) .

13. Système selon la revendication 11 ou 12, **caractérisé en ce que** ledit deuxième moyen de commande (CONTR-TX) inclut un moyen de filtrage pour moyenner dans le temps lesdites corrections (PW-COM-H, PW-COM-V).

14. Système selon la revendication 9, **caractérisé en ce que** lesdits moyens de commande (CONTR-RX, CONTR-TX-H, CONTR-TX-V) sont subdivisés en deux parties, une première (CONTR-RX) placée dans la station de réception (STATION-B) et une deuxième (CONTR-TX-H, CONTR-TX-V) dans la station de transmission (STATION-A) afin d'effectuer une commande de puissance en boucle fermée ayant une plage de puissance dynamique donnée .

- le premier moyen de commande (CONTR-RX) étant agencé de façon à recevoir les mesures des niveaux de puissance de réception ($P_{RX}H$, $P_{RX}V$) des signaux à polarisation horizontale (H) et verticale (V) à la sortie des moyens de détection pertinents (D-H, D-V) et générer des commandes de contrôle de puissance respectives (PC-COM-H, PC-COM-V) incluant des corrections pertinentes des puissances de transmission correspondantes ($P_{TX}H$, $P_{TX}V$) pour égaliser dynamiquement les niveaux de puissance de réception ($P_{RX}H$, $P_{RX}V$);
- les deuxièmes moyens de commande (CONTR-TX-H, CONTR-TX-V) étant agencés pour agir sur le gain des deux émetteurs-récepteurs (TRANS-H-A, TRANS-V-A) des signaux à polarisation croisée (H, V) en fonction desdites commandes de contrôle de puissance (PC-COM-H, PC-COM-V).

**15.** Système selon la revendication 13, **caractérisé en ce que** ledit premier moyen de commande (CONTR-RX) inclut un moyen de filtrage pour moyenner dans le temps lesdites commandes de contrôle de puissance (PC-COM-H, PC-COM-V).

DIRECT POWER ATTENUATION IN CROSS-POLARIZATION MICROWAVE LINKS WITH FIXED RAIN INTENSITY

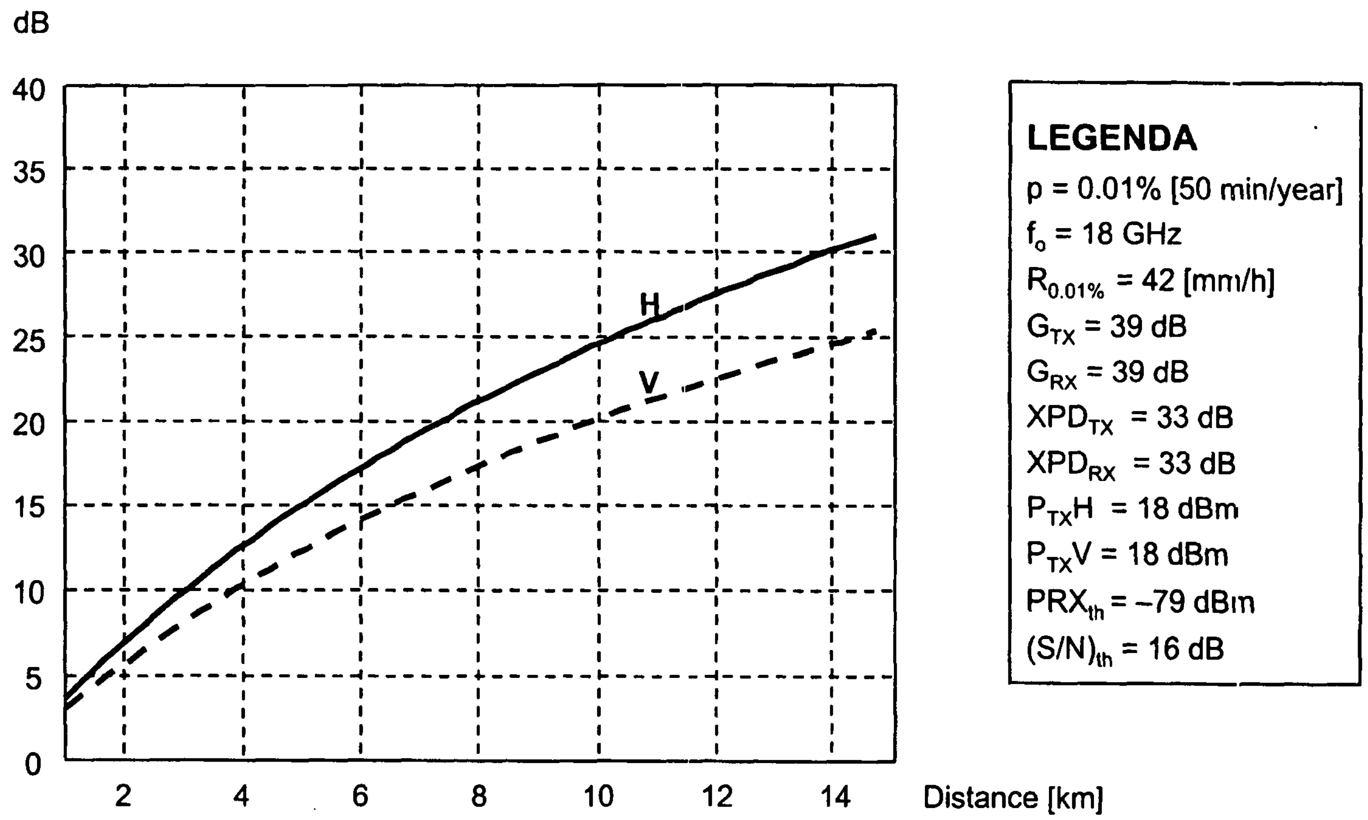


Fig. 1

H AND V CROSS-POLARIZATION ISOLATION (XPI)

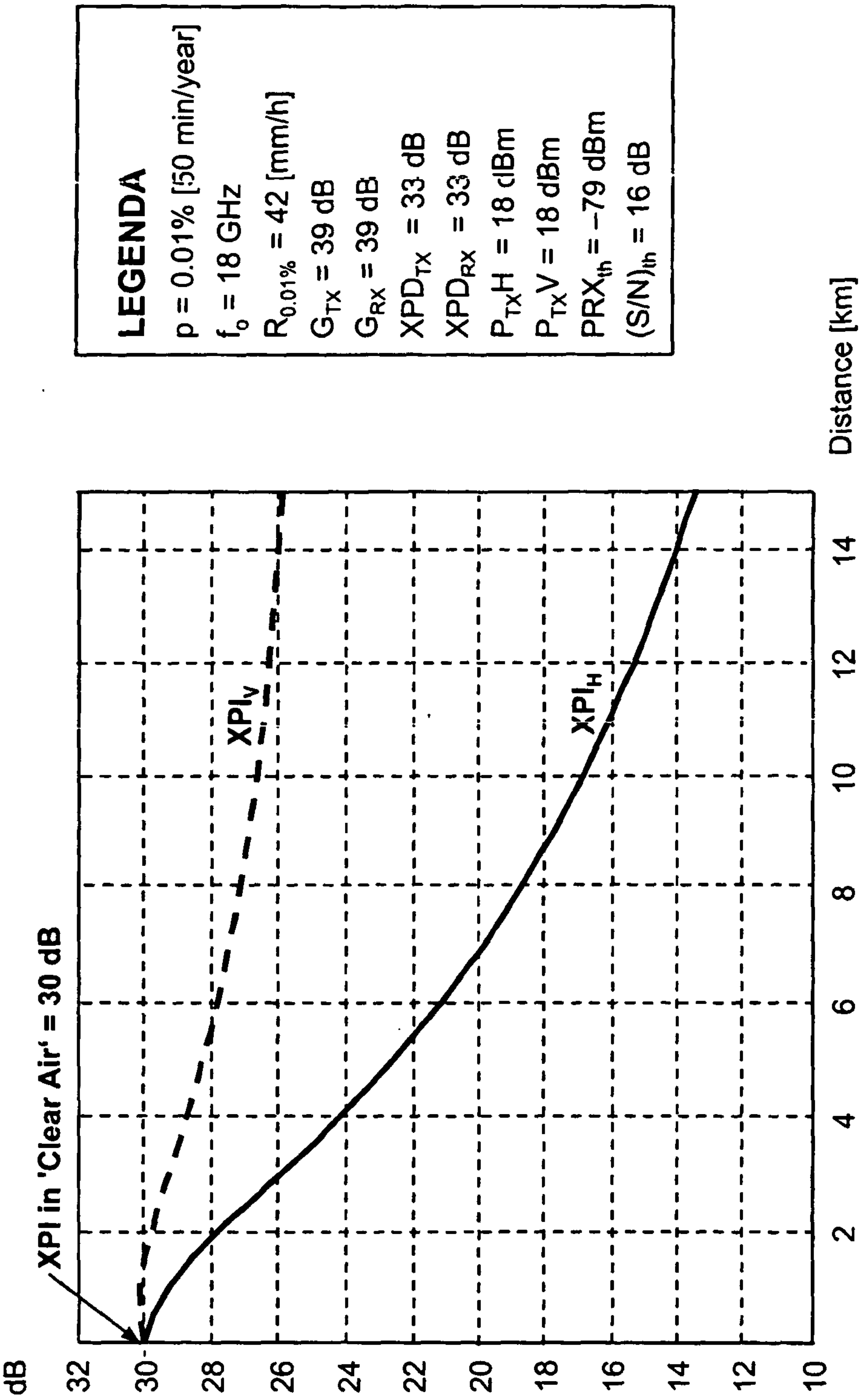


Fig. 2

BALANCE BETWEEN FADING MARGIN (FM)
AND REQUIRED MARGIN (RM)

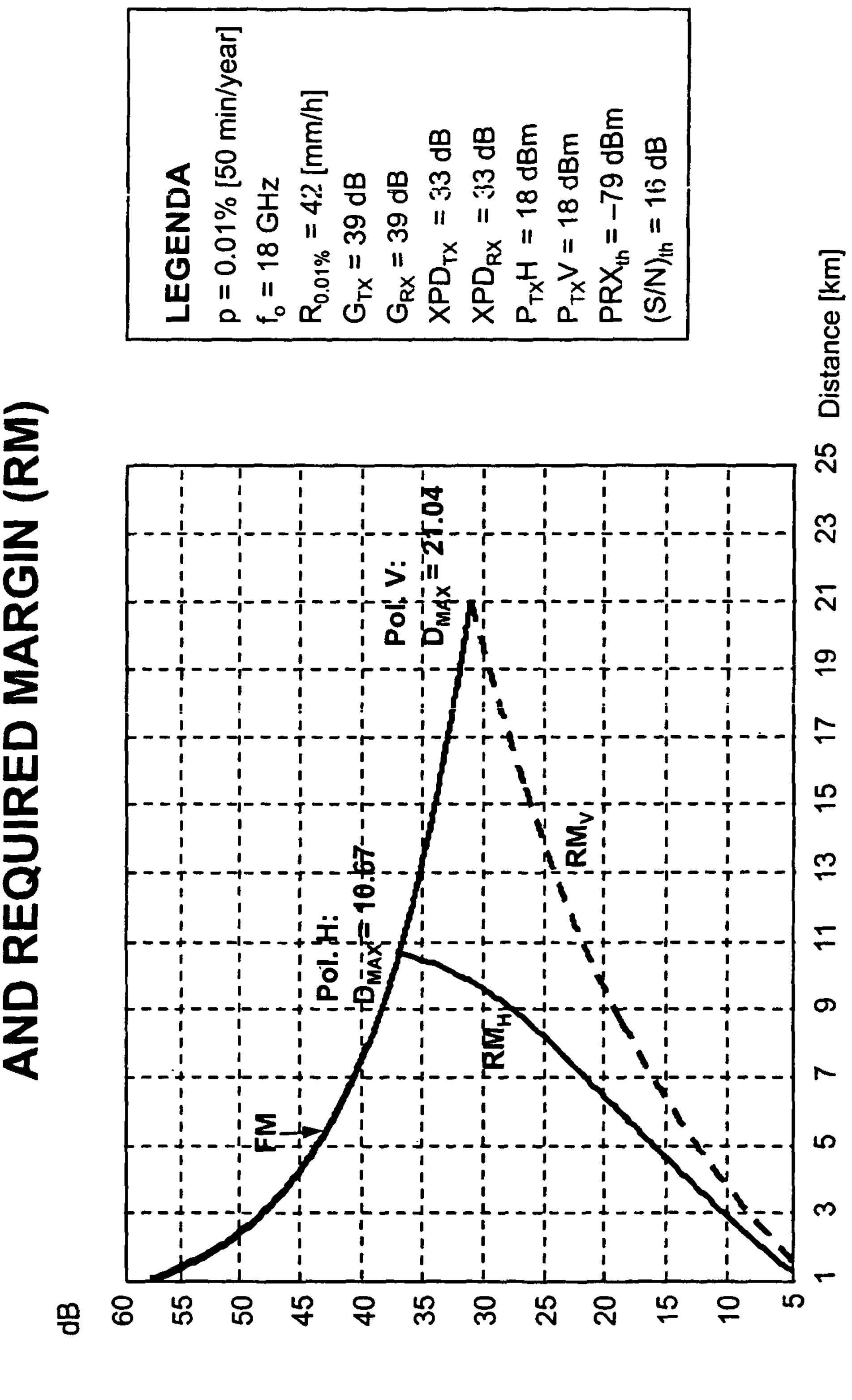


Fig. 3

## COCHANNEL CROSS-POLARIZATION TRANSMISSION SYSTEM WITH XPIC DEVICES (KNOWN ART)

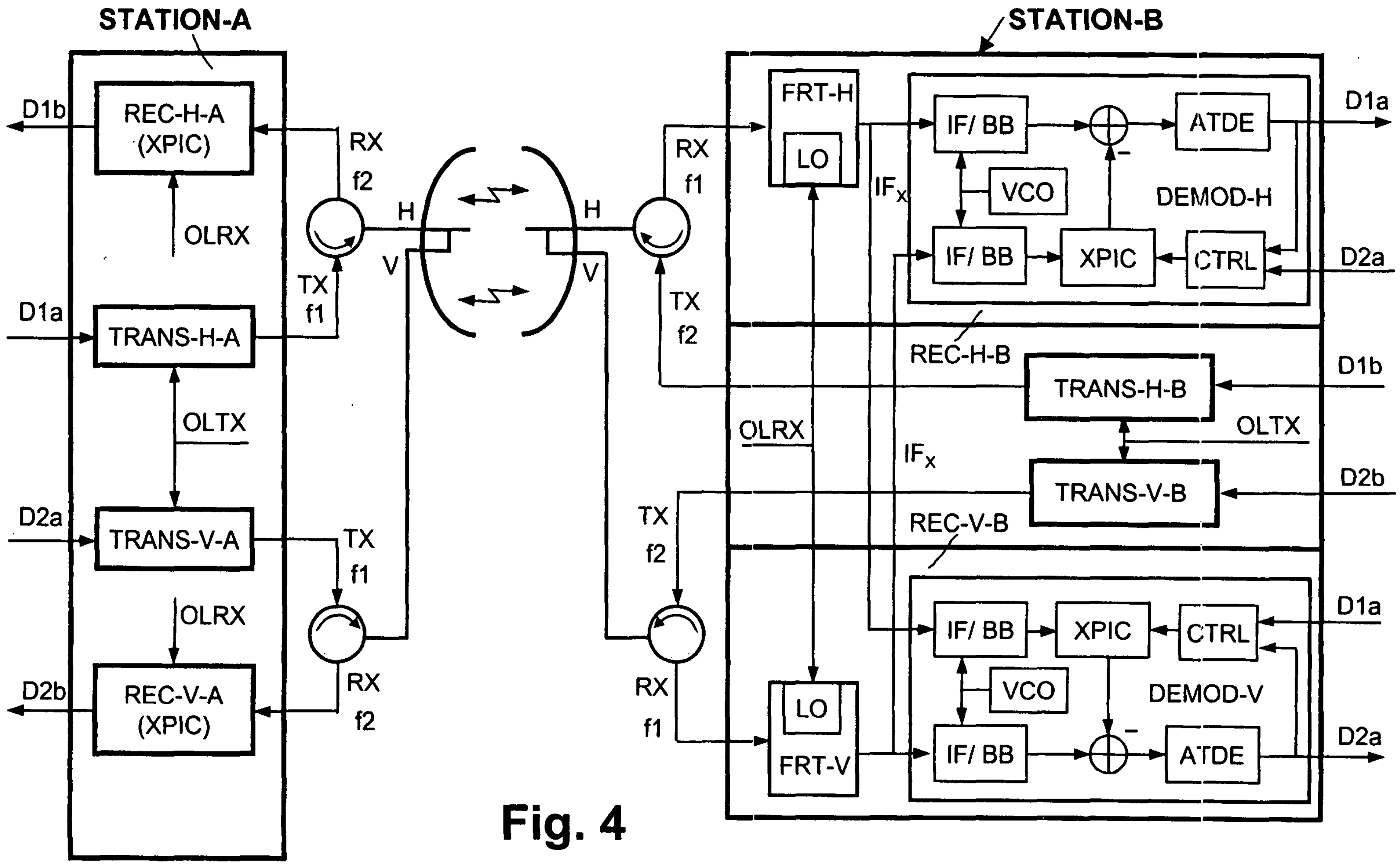


Fig. 4

BALANCE IMPROVEMENT DUE TO XPIC DEVICE

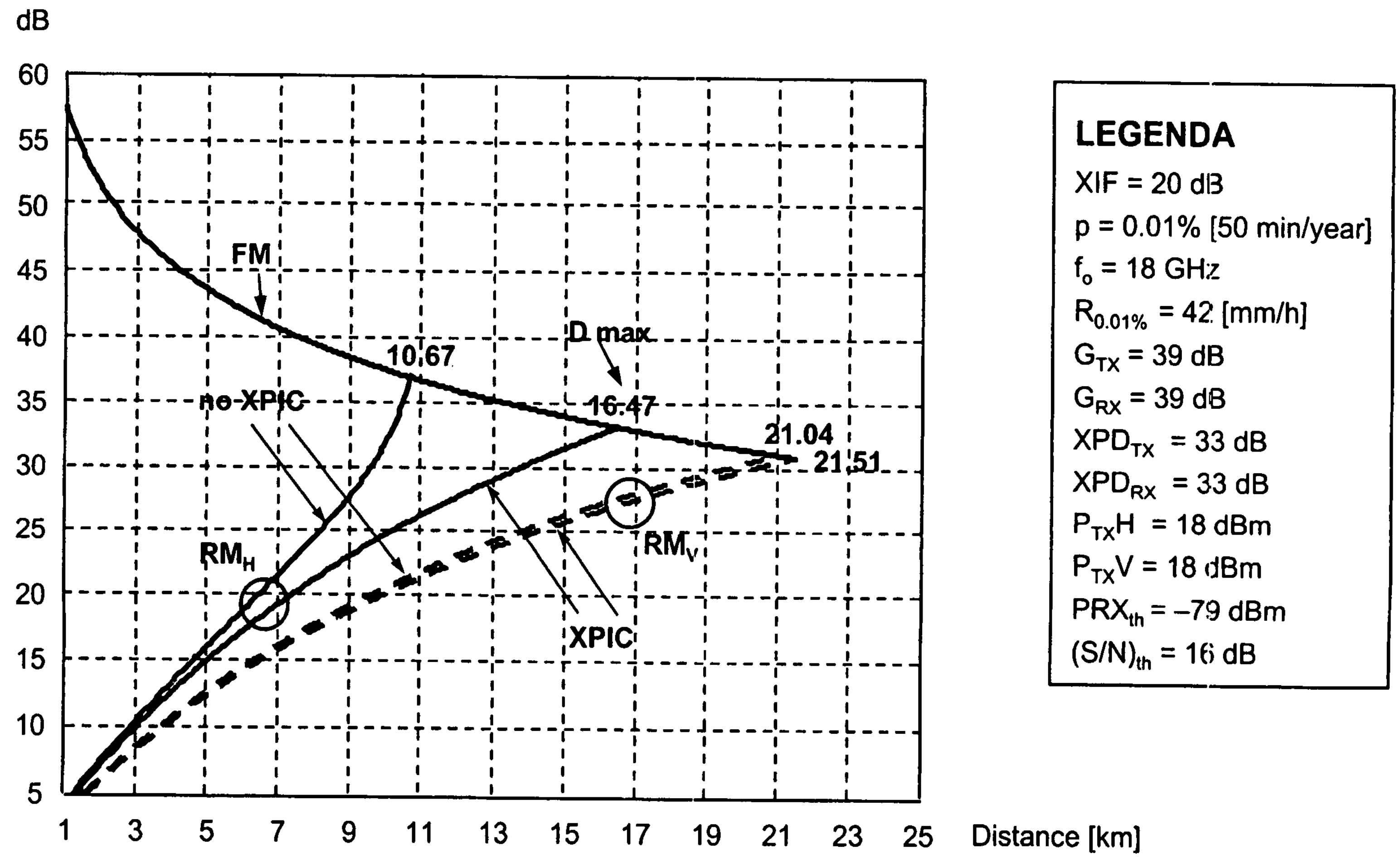


Fig. 5

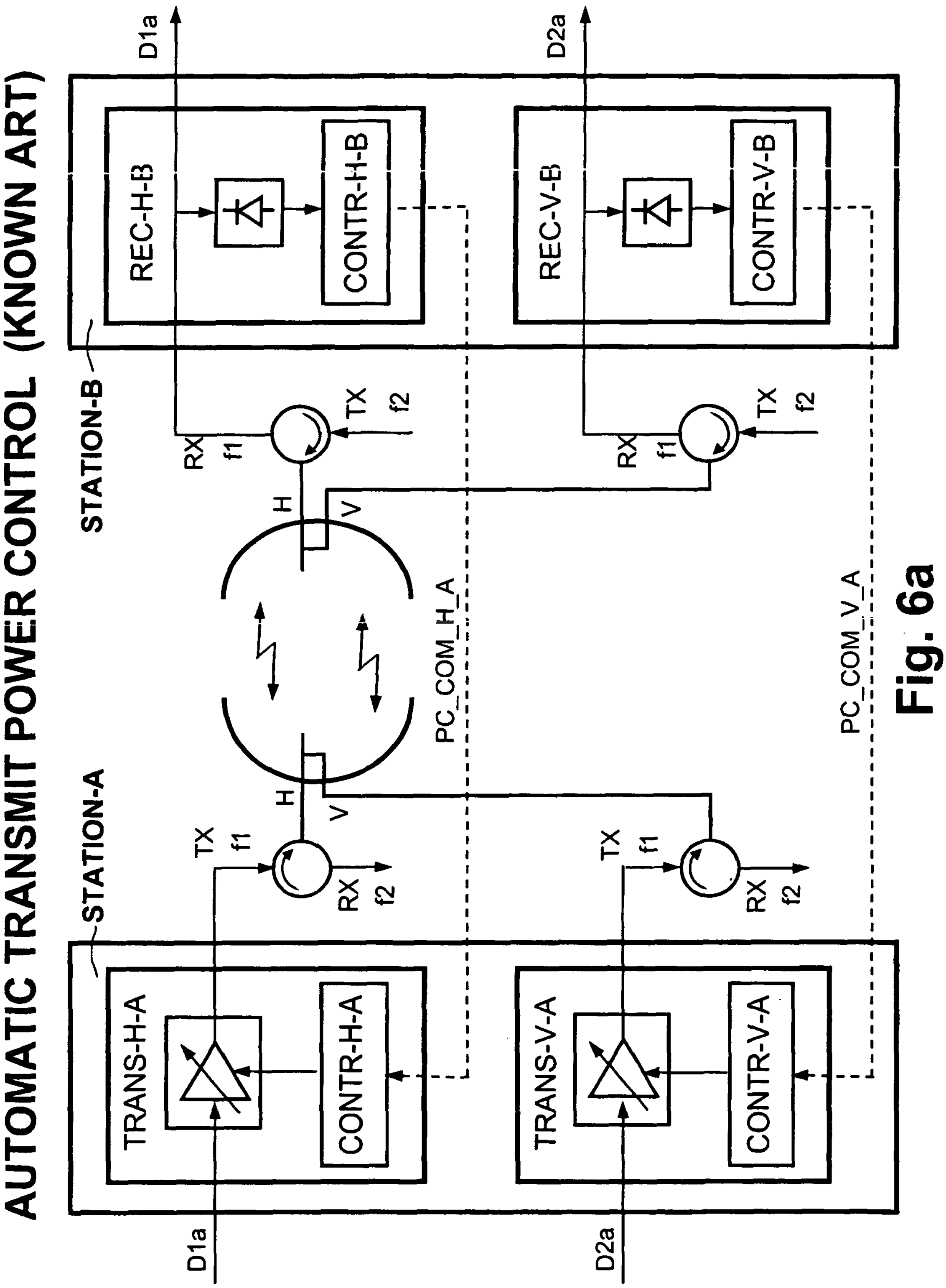
AUTOMATIC TRANSMIT POWER CONTROL (KNOWN ART)
STATION-A
STATION-B
TRANS-H-A
CONTR-H-A
TRANS-V-A
CONTR-V-A
REC-H-B
CONTR-H-B
REC-V-B
CONTR-V-B
D1a
D2a
TX
f1
RX
f2
H
V
PC_COM_H_A
PC_COM_V_A

Fig. 6a

ATPC: TRANSMISSION AND RECEPTION POWER DAGRAMS vs RAIN RATE (KNOWN ART of Fig.6a)

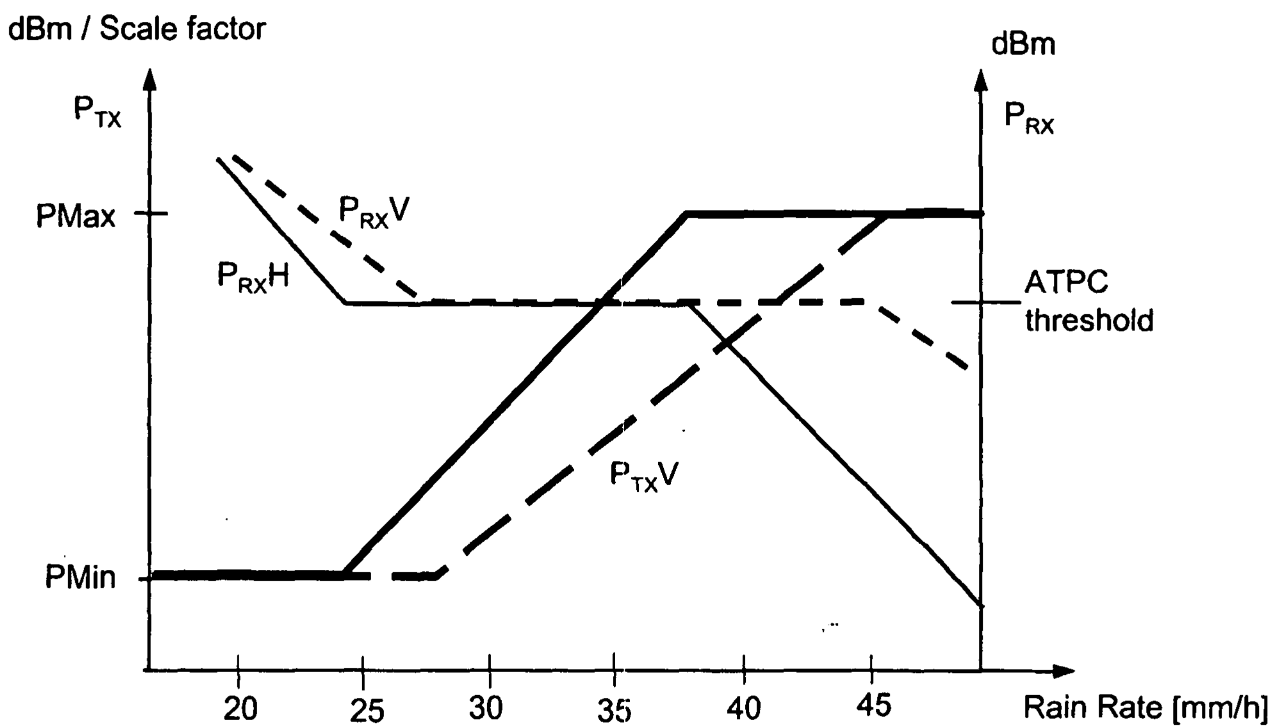


Fig. 6b

AUTOMATIC TRANSMIT POWER CONTROL (KNOWN ART)

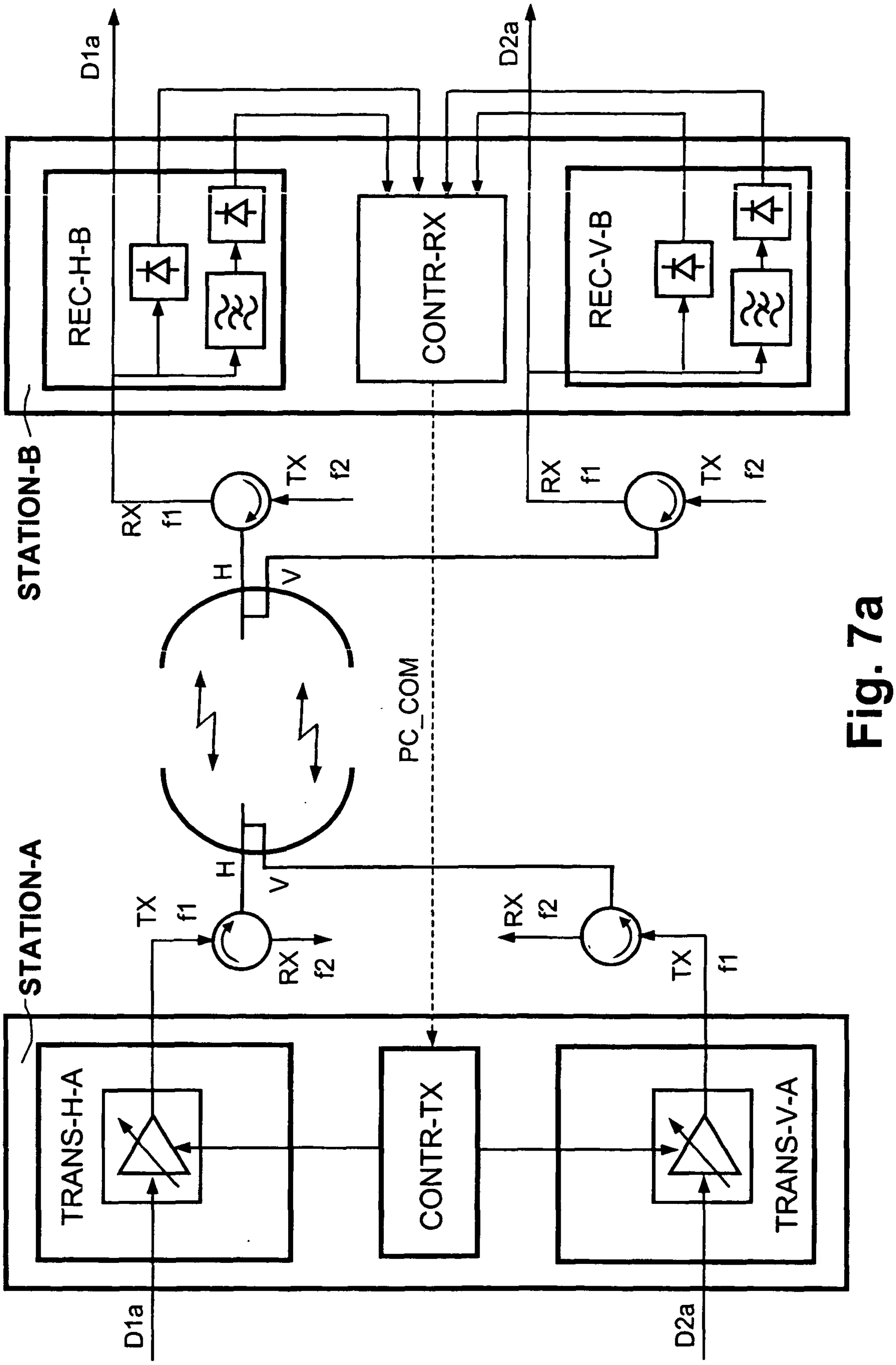


Fig. 7a

**ATPC: POSSIBLE TRANSMISSION AND RECEPTION POWER DAGRAMS vs RAIN RATE (KNOWN ART of Fig.7a)**

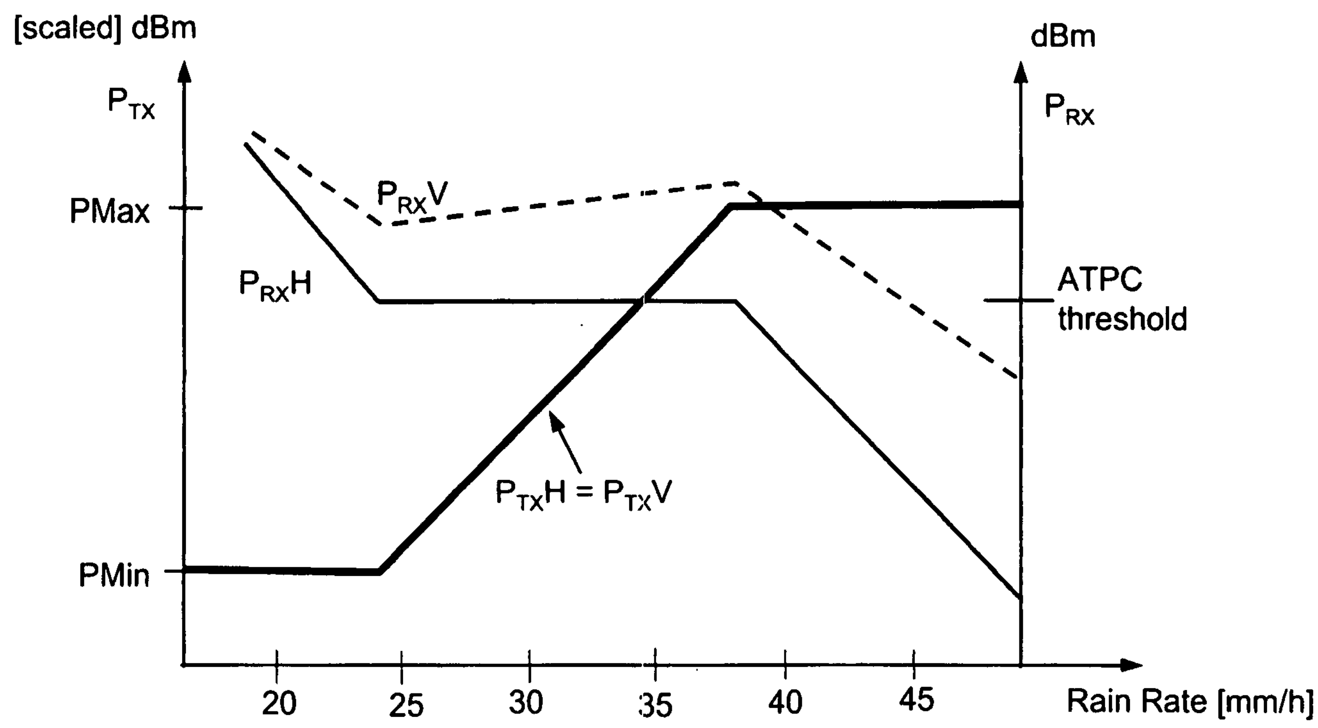


Fig. 7b

## BALANCE BETWEEN FM AND RM WITH 3 dB TRANSMISSION ΔP BETWEEN V AND H COMPONENTS

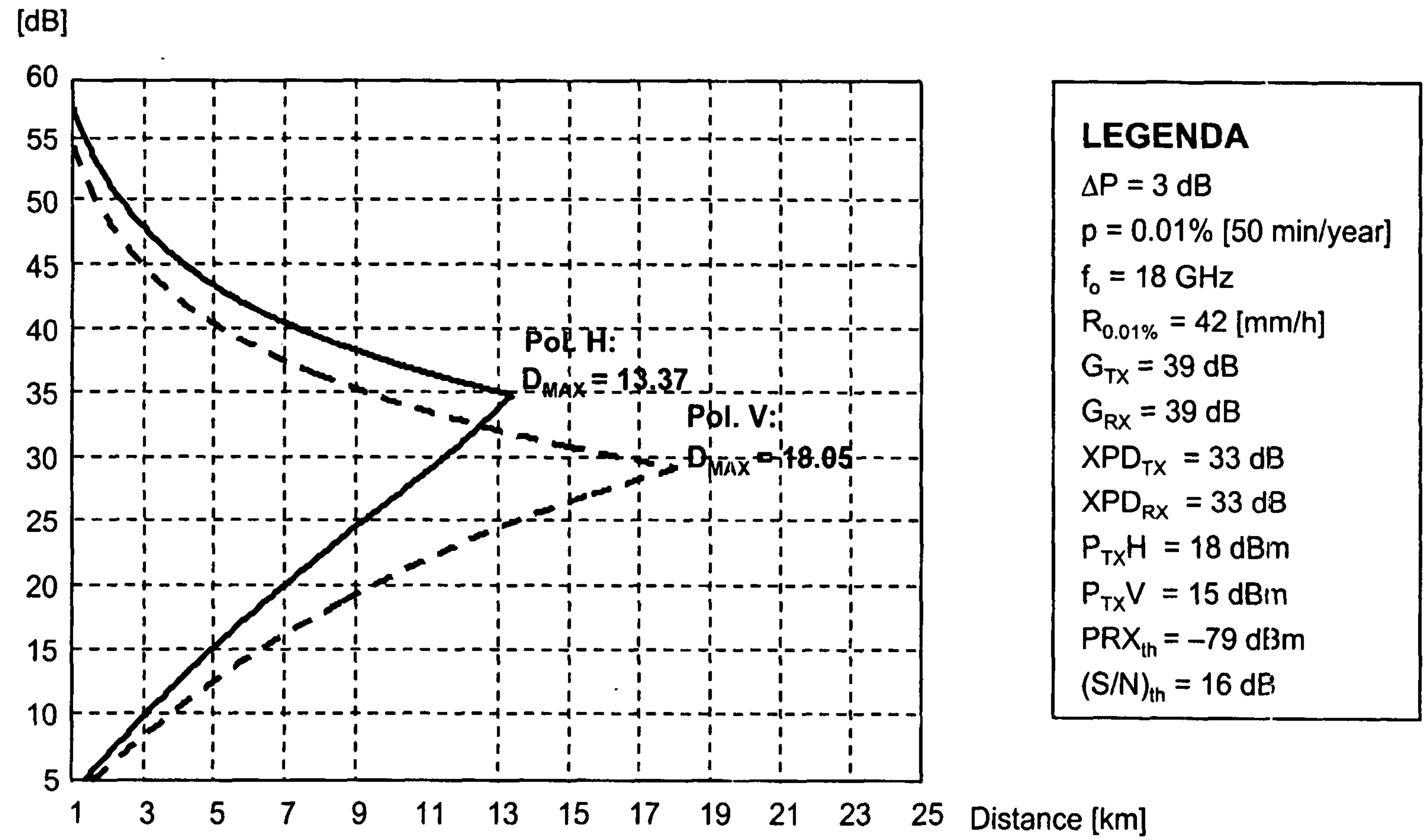


Fig. 8

## BALANCE BETWEEN FM AND RM WITH OPTIMUM TRANSMISSION ΔP BETWEEN V AND H COMPONENTS

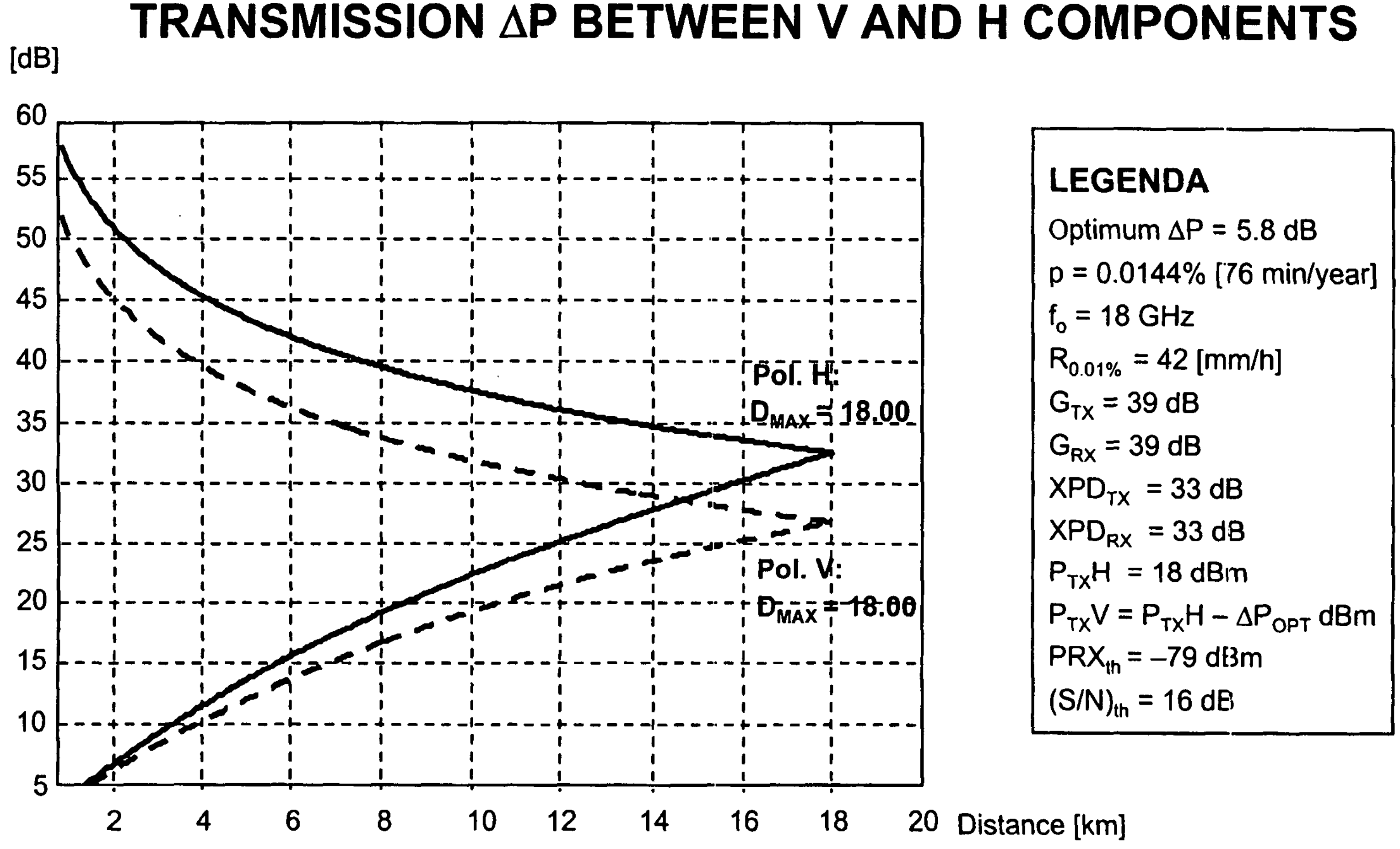


**Fig. 9**

## CROSS-POLARIZATION TRANSMISSION WITH STATIC ΔP (OPTIMUM) BETWEEN V AND H OUTPUT POWER

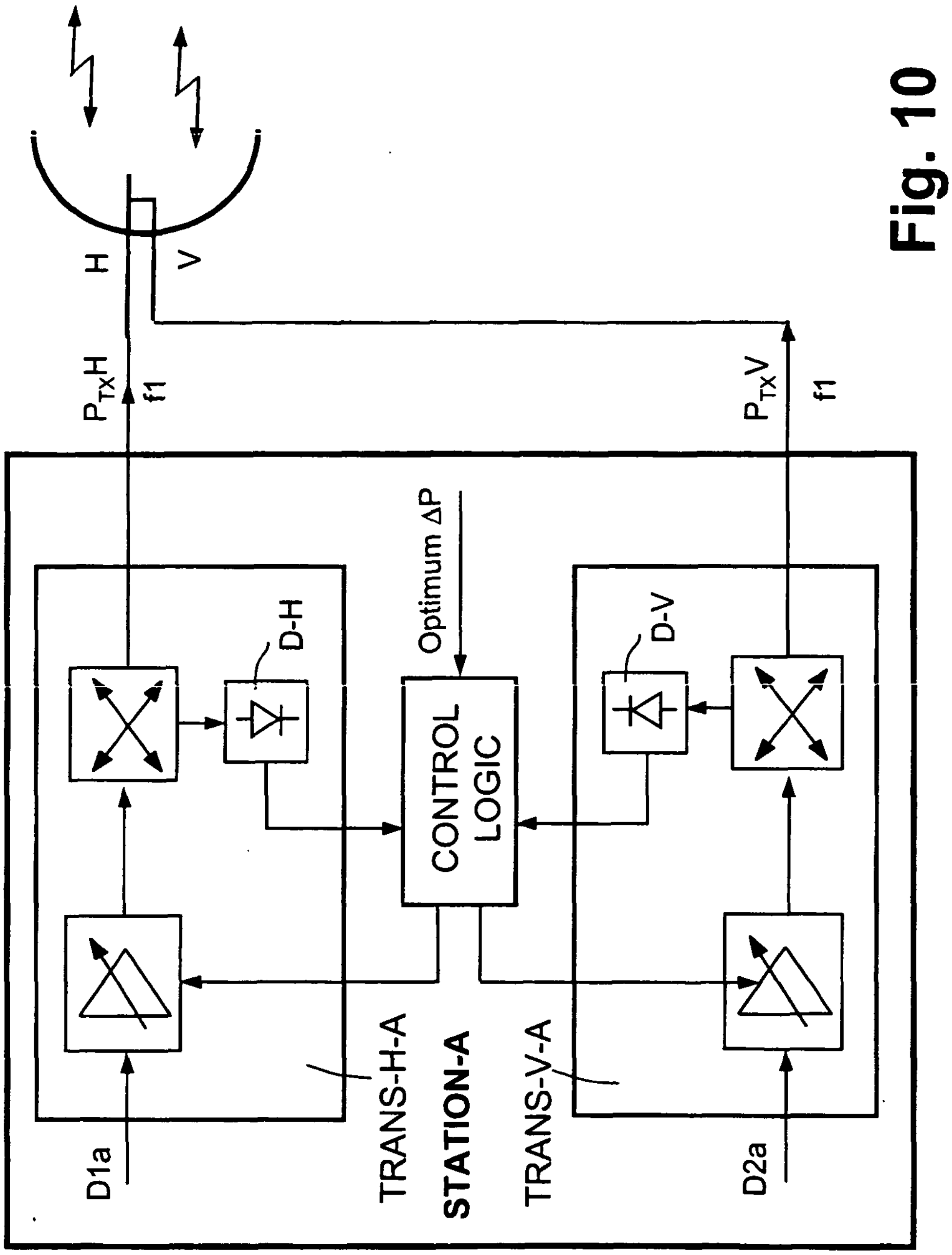


Fig. 10

**OPTIMUM ΔP AND CONSEQUENT LINK UNAVAILABILITY vs DISTANCE BETWEEN ANTENNAS**

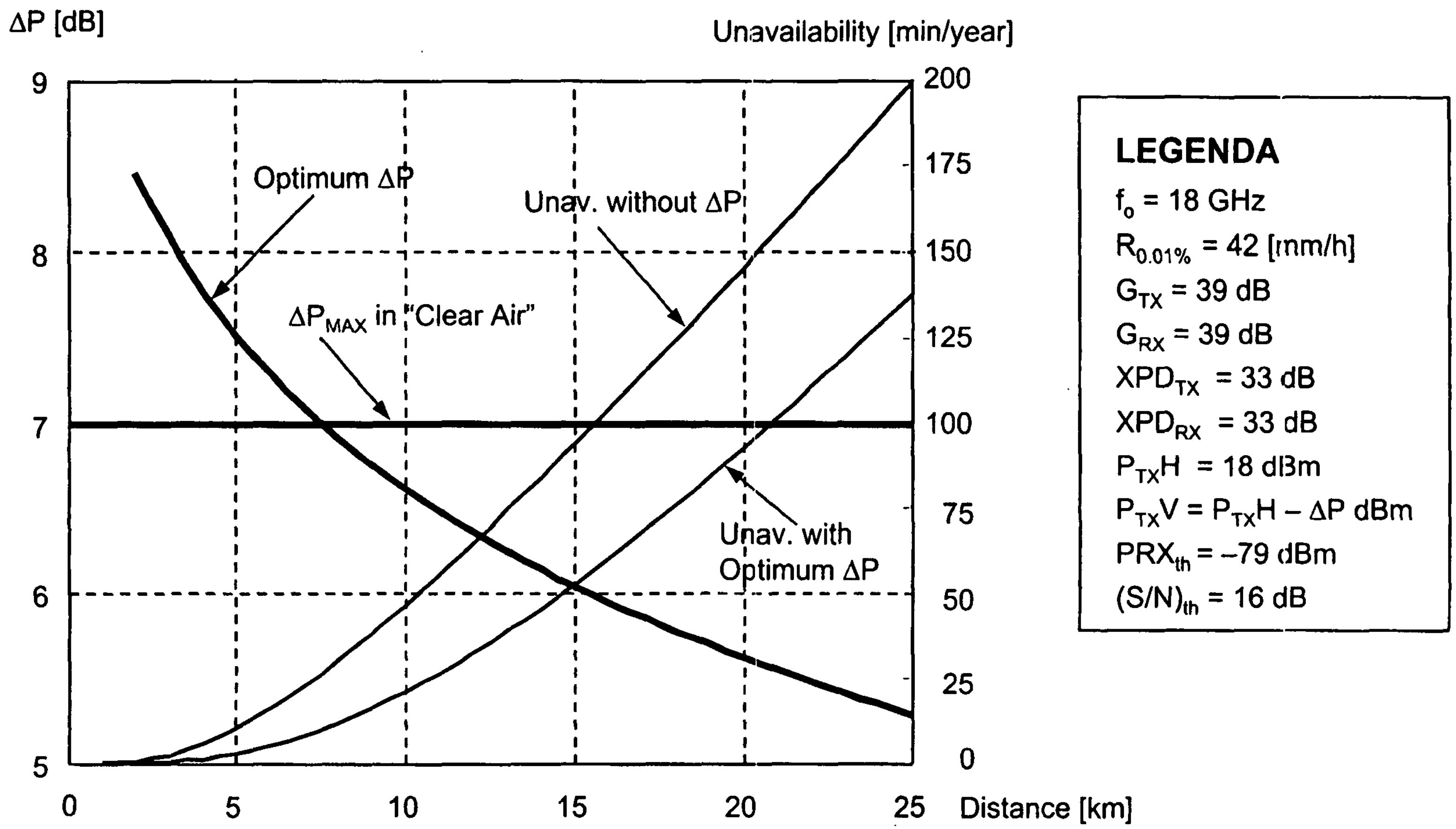


**LEGENDA**

$f_o$ = 18 GHz

$R_{0.01\%}$ = 42 [mm/h]

$G_{TX}$ = 39 dB

$G_{RX}$ = 39 dB

$XPD_{TX}$ = 33 dB

$XPD_{RX}$ = 33 dB

$P_{TX}H$ = 18 dBm

$P_{TX}V = P_{TX}H - \Delta P$ dBm

$PRX_{th}$ = –79 dBm

$(S/N)_{th}$ = 16 dB

**Fig. 11**

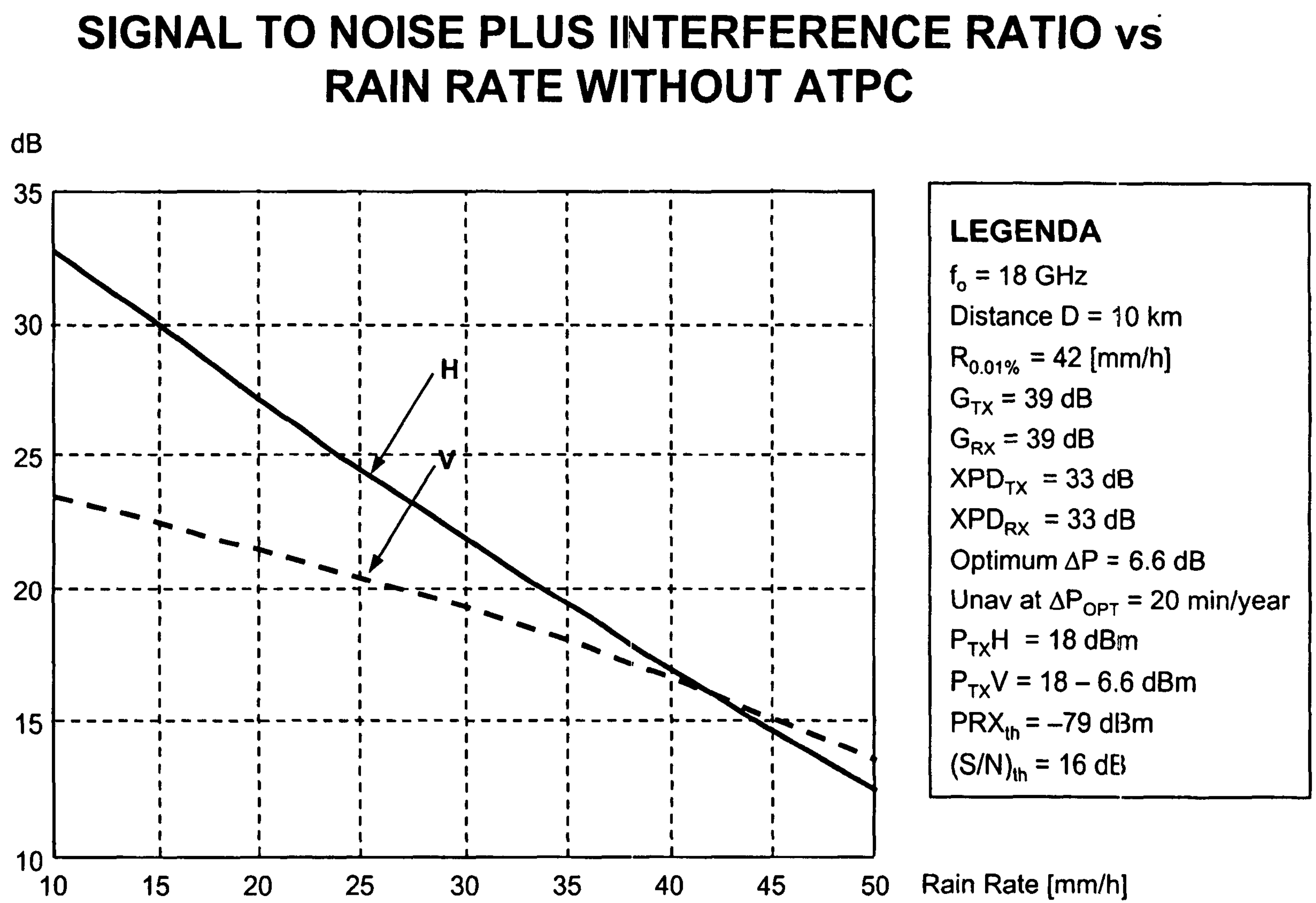
SIGNAL TO NOISE PLUS INTERFERENCE RATIO vs RAIN RATE WITHOUT ATPC
dB
35
30
25
20
15
10
10
15
20
25
30
35
40
45
50
Rain Rate [mm/h]
H
V
LEGENDA
f_o = 18 GHz
Distance D = 10 km
R_0.01% = 42 [mm/h]
G_TX = 39 dB
G_RX = 39 dB
XPD_TX = 33 dB
XPD_RX = 33 dB
Optimum ΔP = 6.6 dB
Unav at ΔP_OPT = 20 min/year
P_TXH = 18 dBm
P_TXV = 18 – 6.6 dBm
PRX_th = –79 dBm
(S/N)_th = 16 dB

Fig. 12

RADIOLINK SYSTEM WITH ATPC FEATURING THE CONTROL AT THE TRANSMISSION SIDE

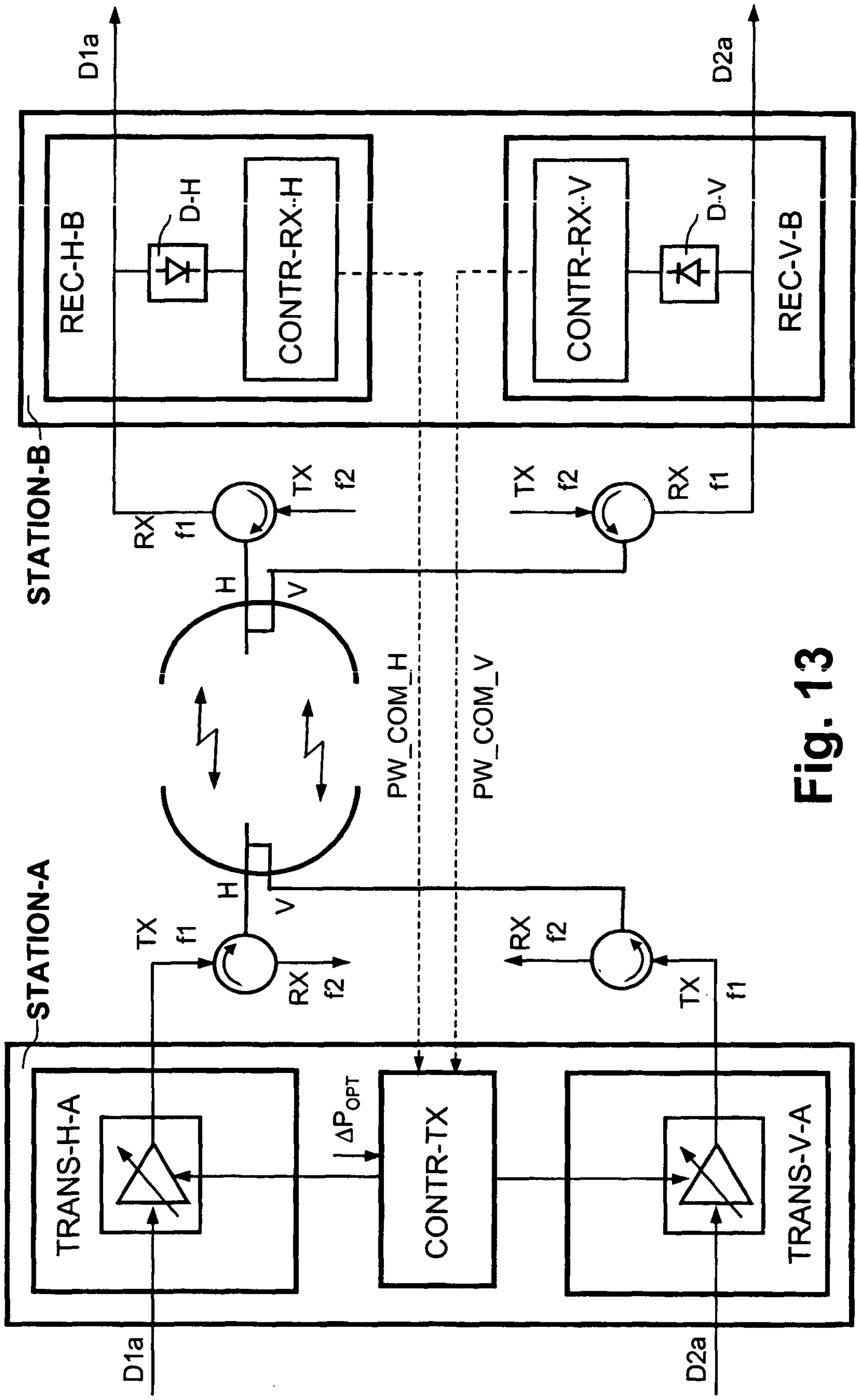


Fig. 13

**TRANSMISSION AND RECEPTION POWER DIAGRAMS vs RAIN RATE FOR THE ATPC OF Fig.13**

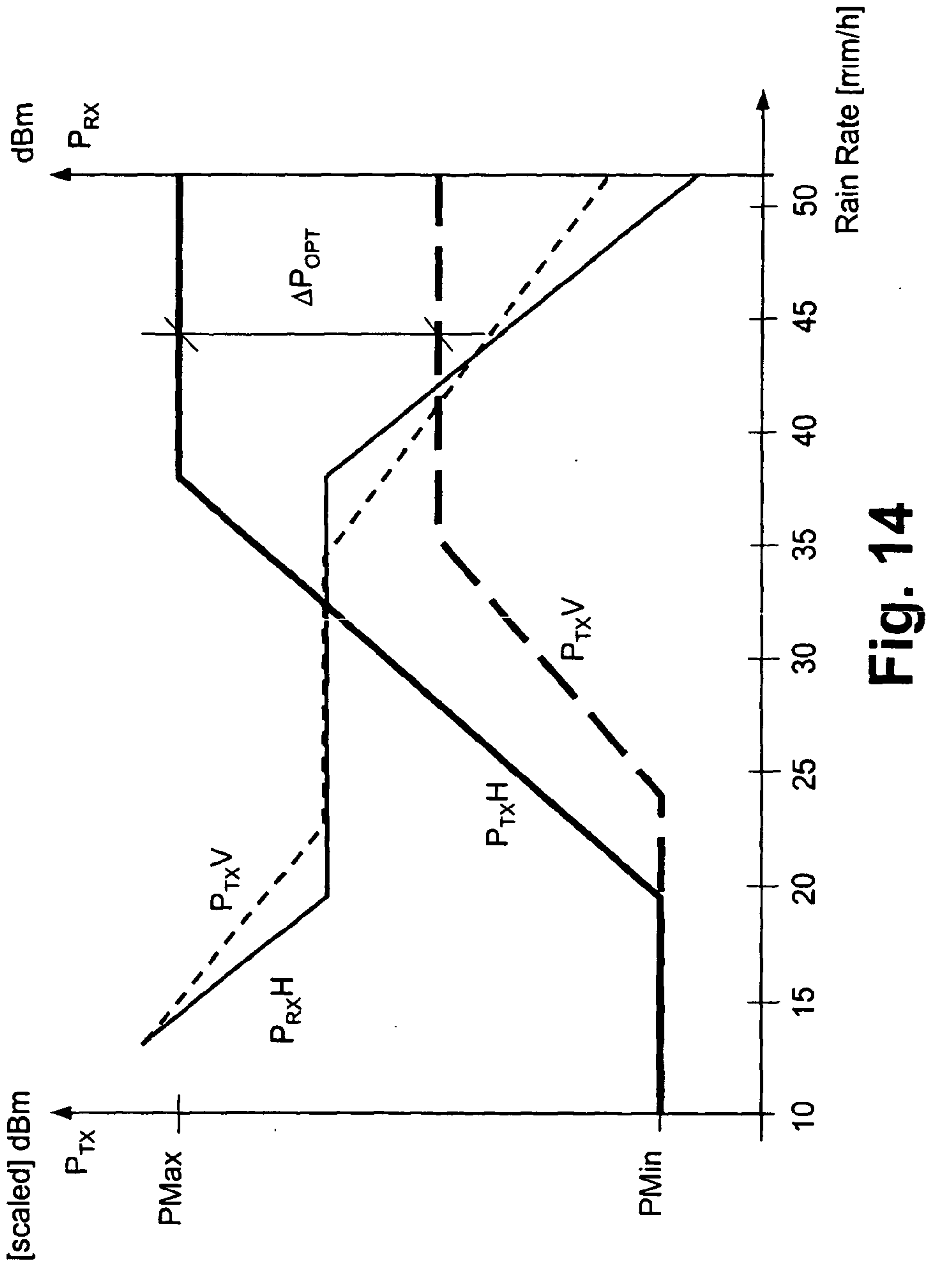


**Fig. 14**

RADIOLINK SYSTEM WITH ATPC FEATURING THE CONTROL AT THE RECEPTION SIDE

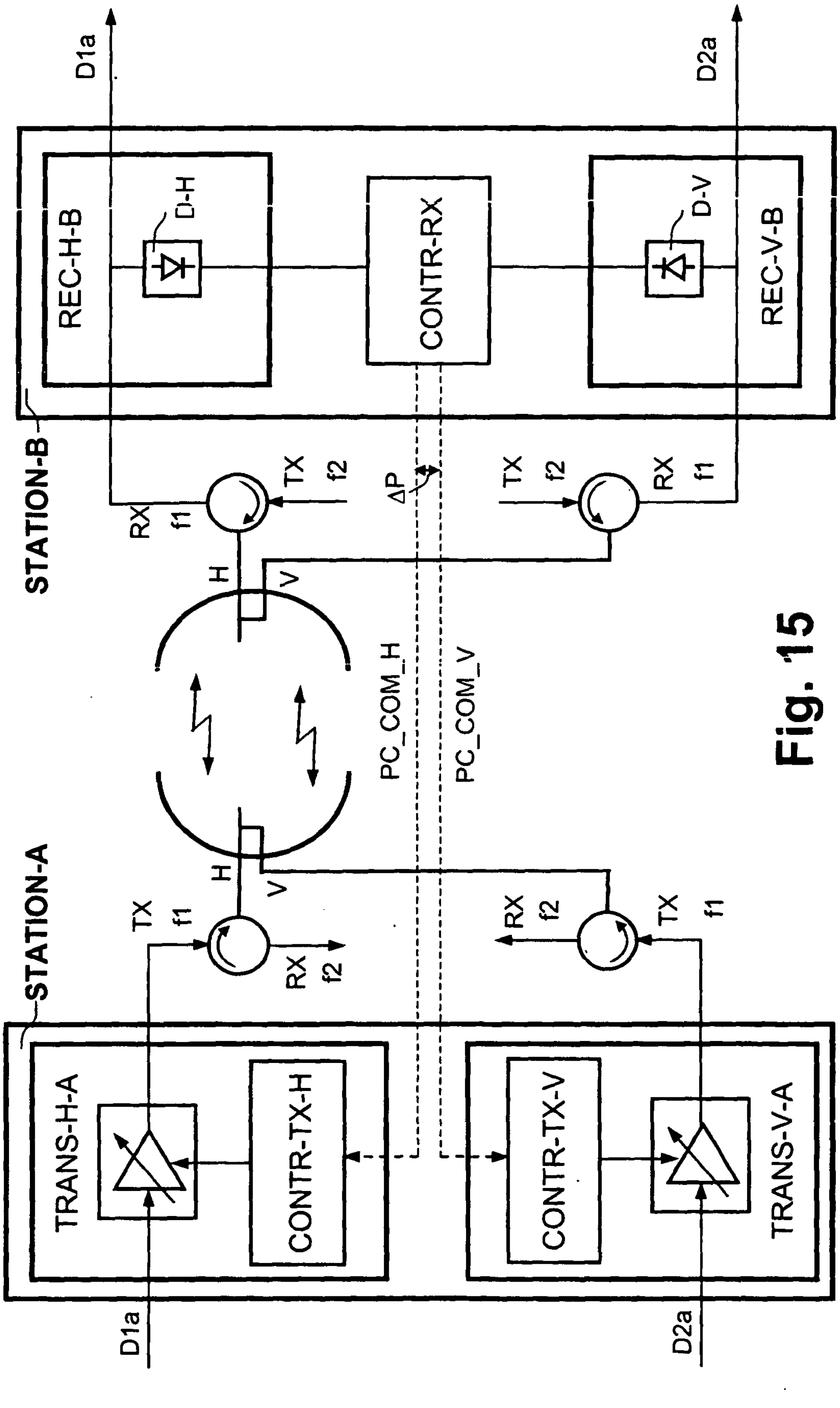


Fig. 15

**TRANSMISSION AND RECEPTION POWER DIAGRAMS vs RAIN RATE FOR THE ATPC OF FIG.15**

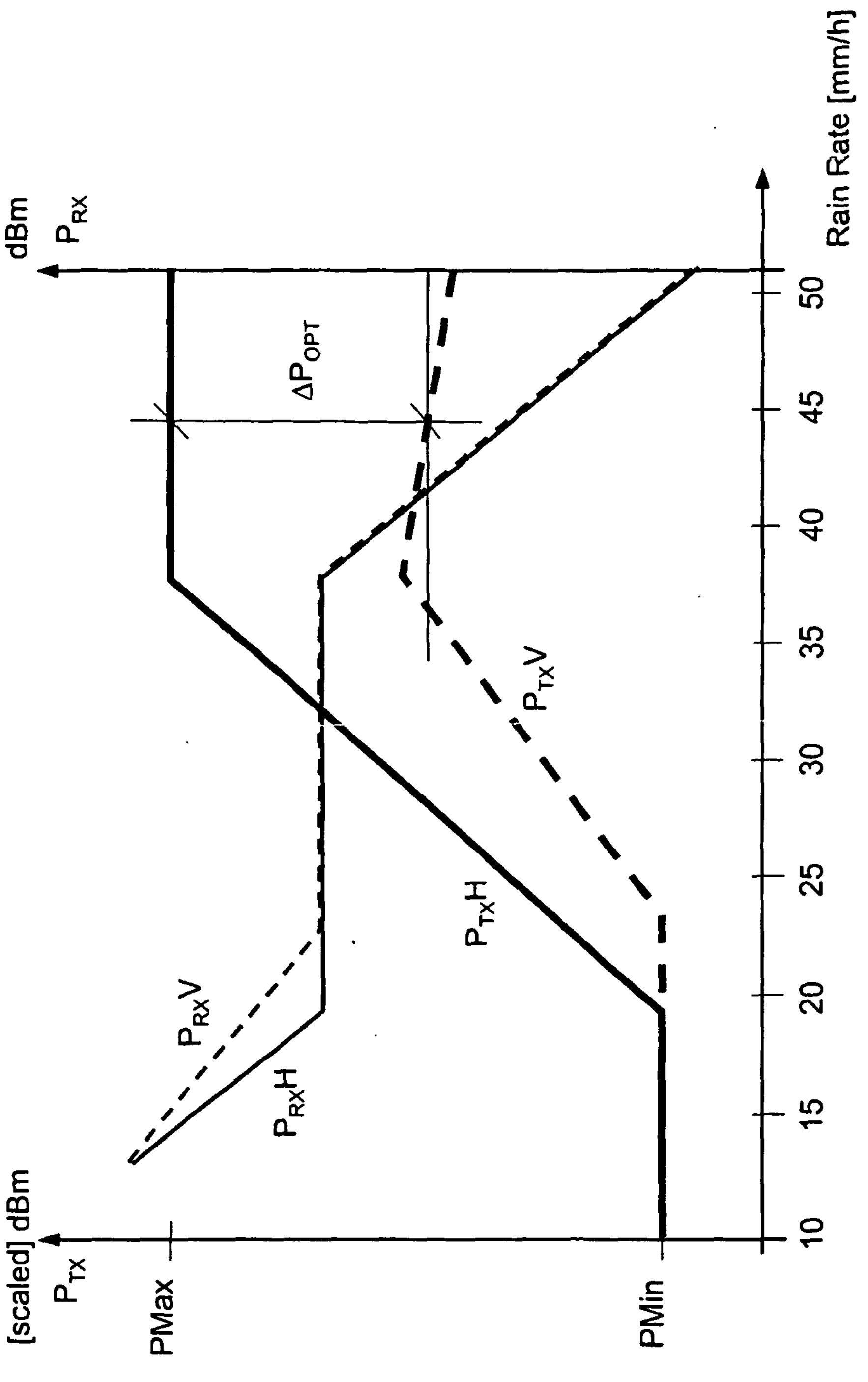


Fig. 16

## $P_{RX}H$ AND $P_{RX}V$ RECEPTION POWERS vs RAIN RATE WITH IDEAL ATPC

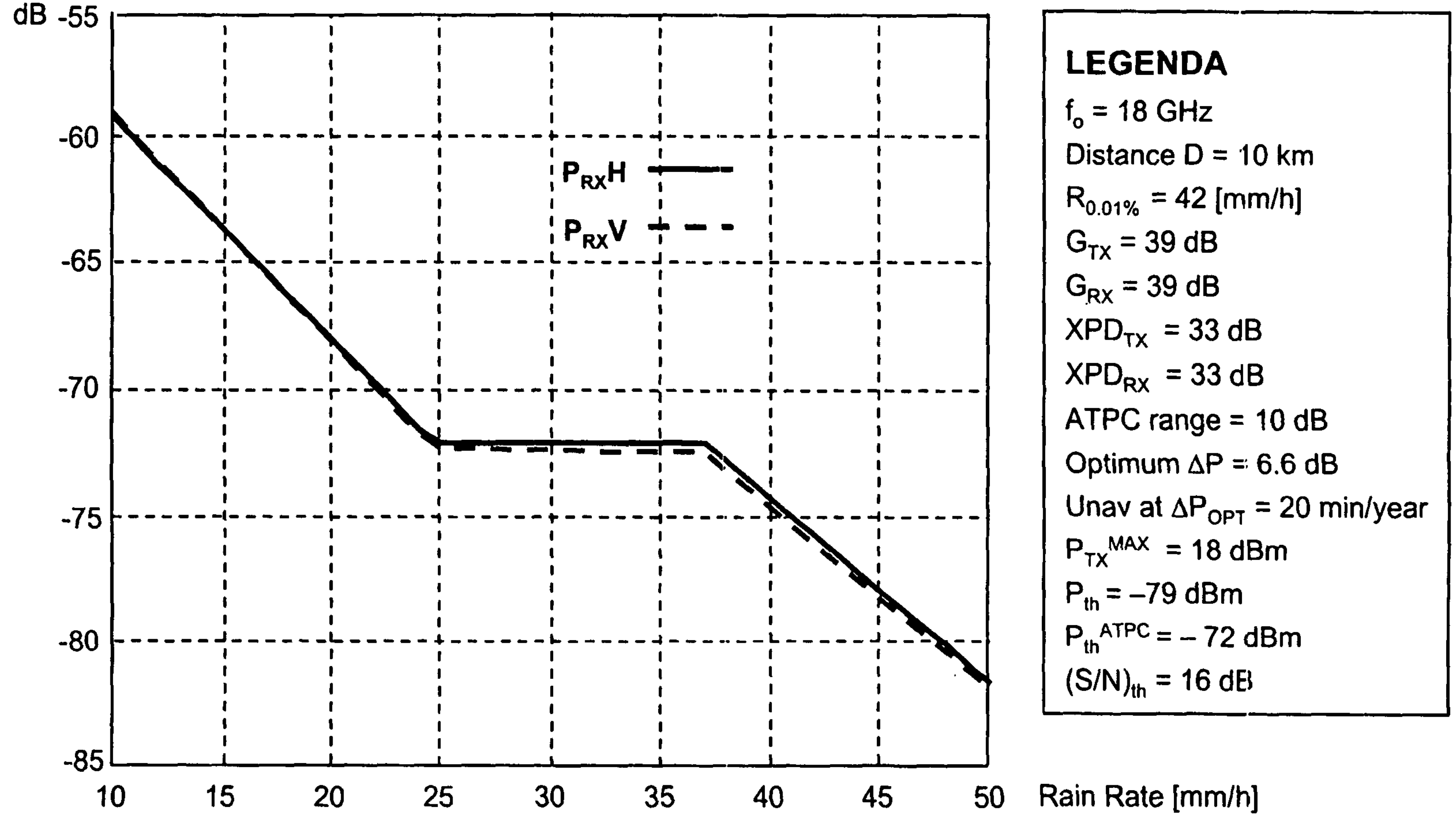


Fig. 17

**$P_{TX}H$ AND $P_{TX}V$ TRANSMISSION POWERS vs RAIN RATE WITH IDEAL ATPC AT THE RECEPTION SIDE**

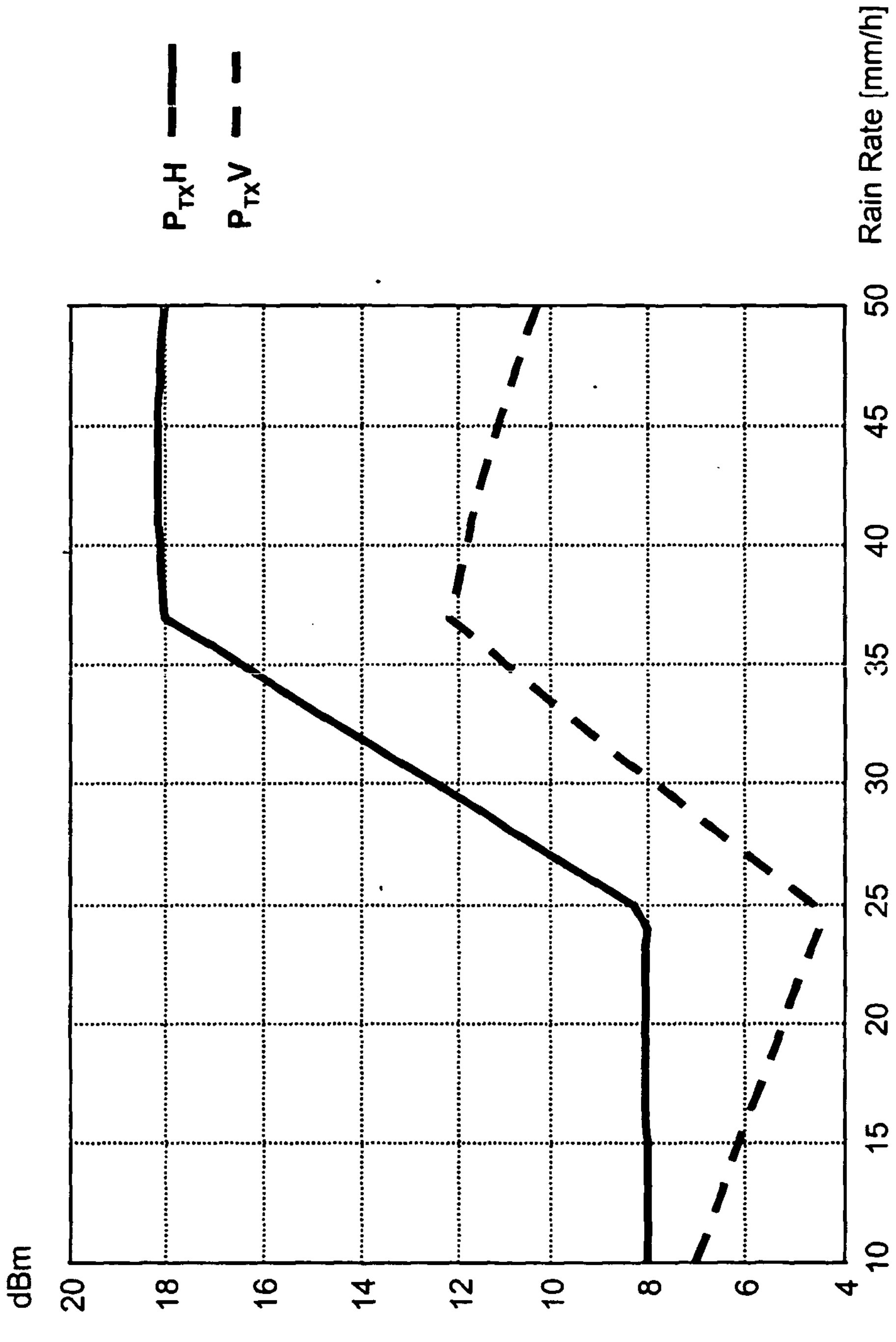


Fig. 18

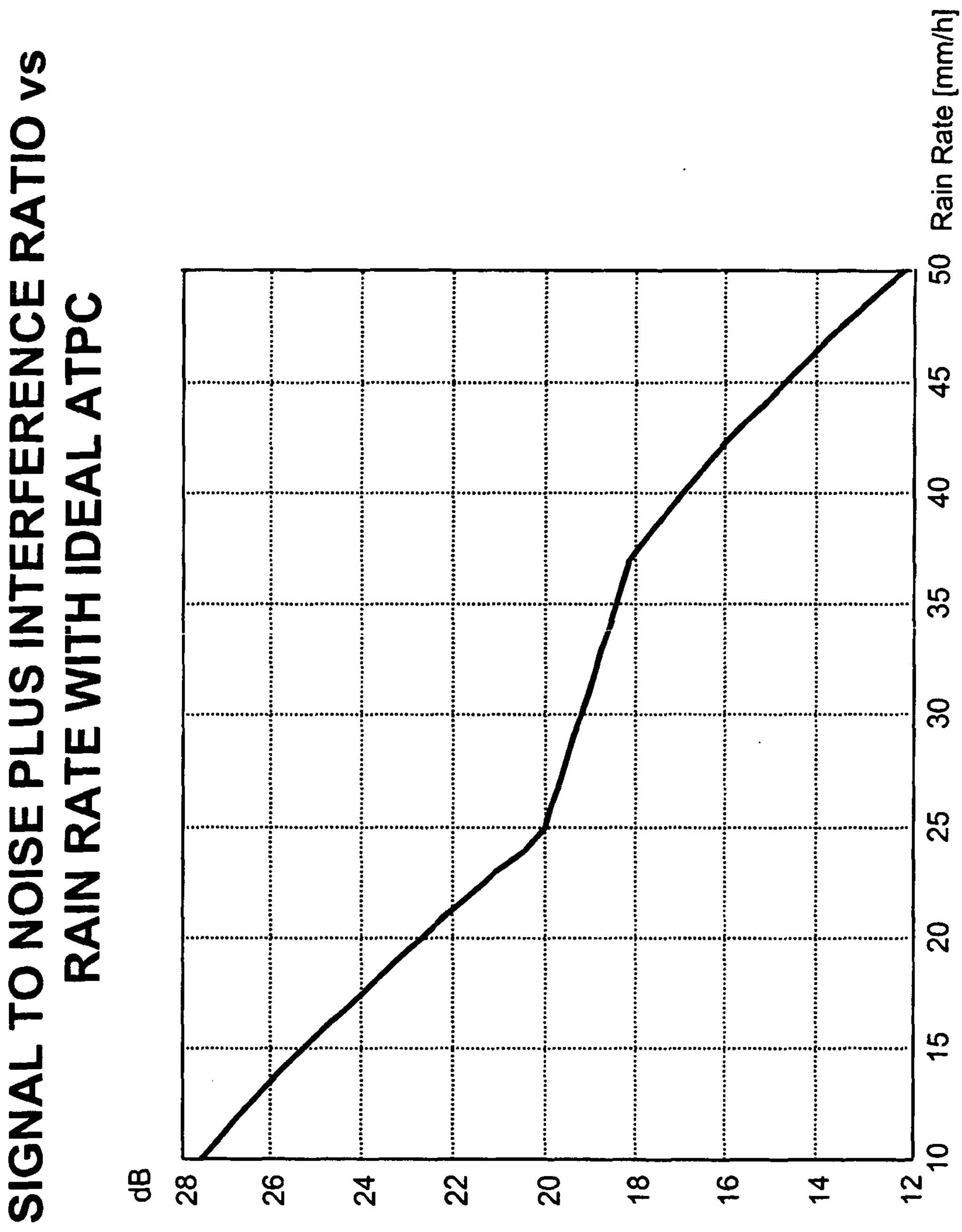
SIGNAL TO NOISE PLUS INTERFERENCE RATIO vs
RAIN RATE WITH IDEAL ATPC
dB
28
26
24
22
20
18
16
14
12
10
15
20
25
30
35
40
45
50
Rain Rate [mm/h]

Fig. 19

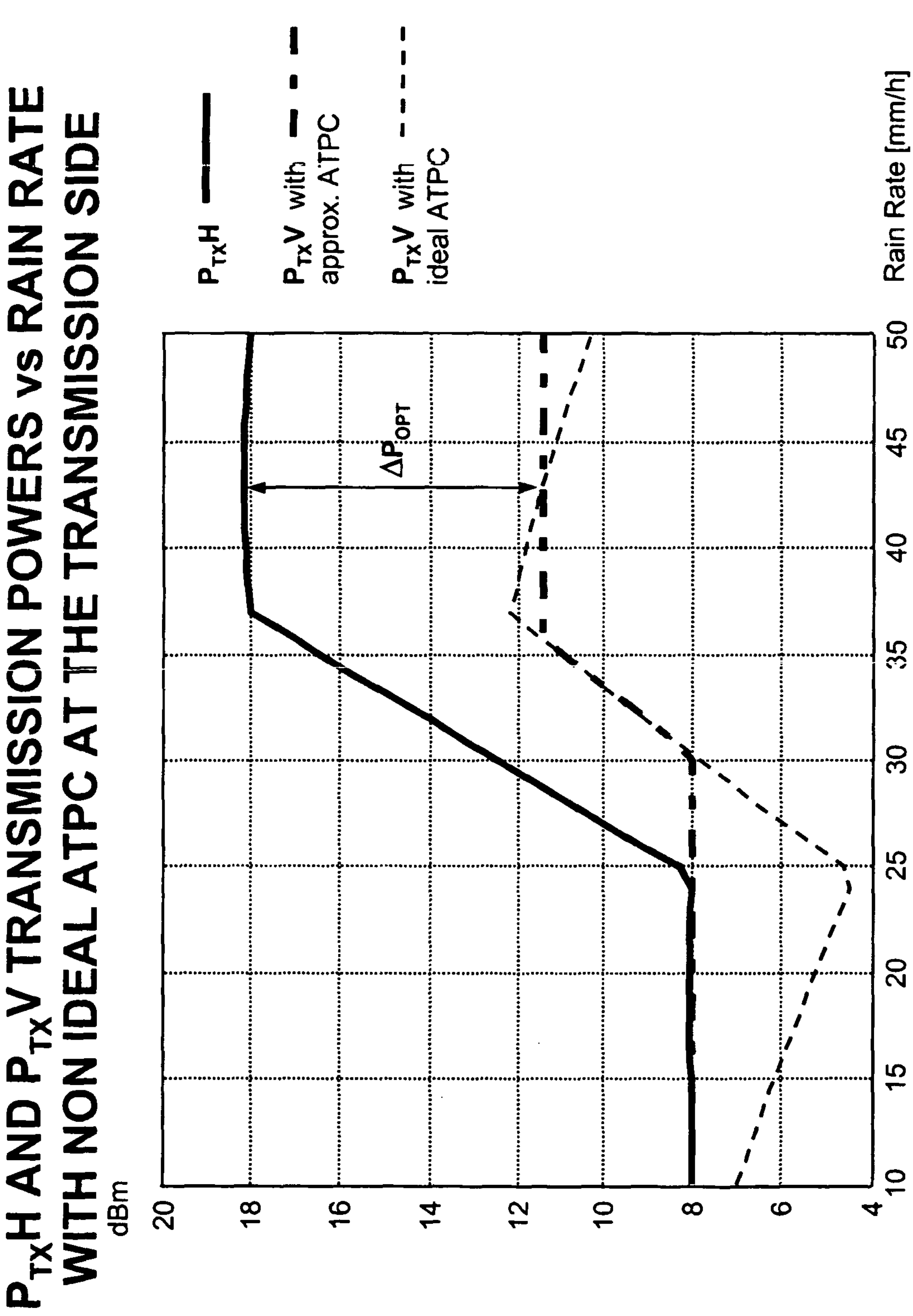

$P_{TX}H$ AND $P_{TX}V$ TRANSMISSION POWERS vs RAIN RATE
WITH NON IDEAL ATPC AT THE TRANSMISSION SIDE
dBm
20
18
16
14
12
10
8
6
4
10
15
20
25
30
35
40
45
50
$\Delta P_{OPT}$
$P_{TX}H$
$P_{TX}V$ with approx. ATPC
$P_{TX}V$ with ideal ATPC
Rain Rate [mm/h]


Fig. 20

$P_{RX}H$ AND $P_{RX}V$ RECEPTION POWERS vs RAIN RATE WITH NON IDEAL ATPC AT THE TRANSMISSION SIDE

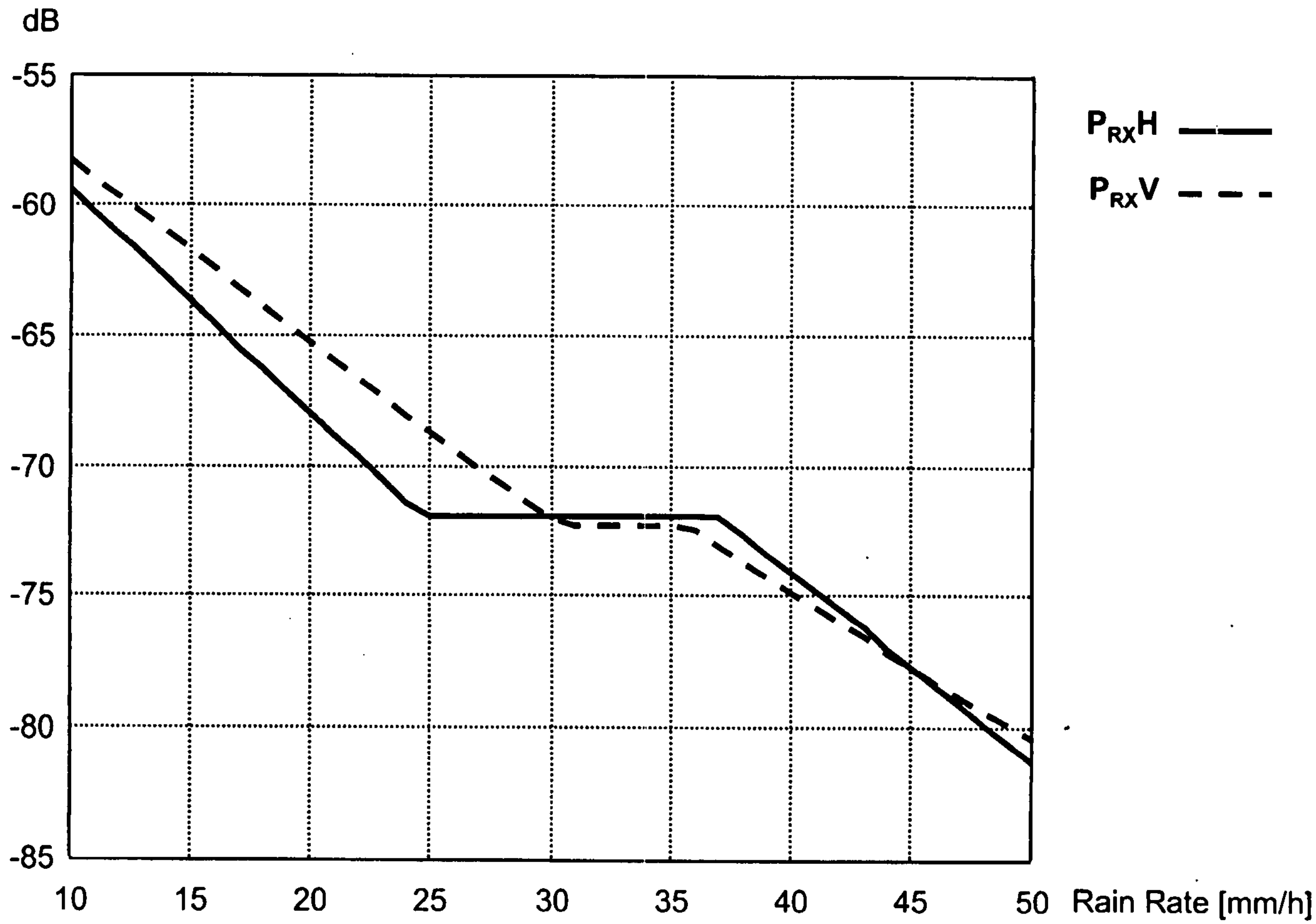


Fig. 21

## H AND V SIGNAL TO NOISE PLUS INTERFERENCE RATIOS vs RAIN RATE WITH NON IDEAL ATPC AT TRANSMISSION SIDE

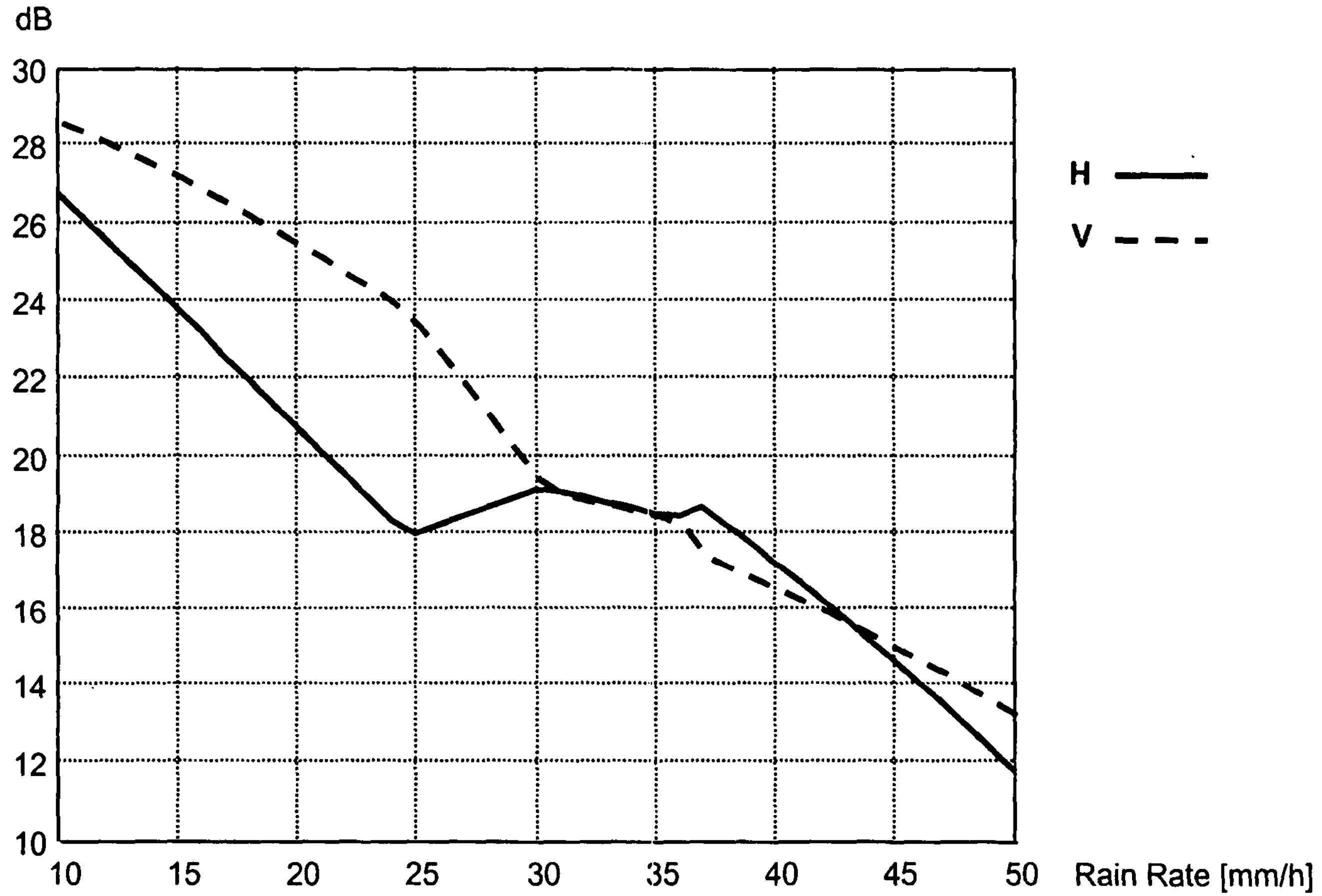


Fig. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5392459 A